(19) Europäisches Patentamt
European Patent Office
Office européen des brevets

(11) **EP 3 306 592 B1**

(12) **FASCICULE DE BREVET EUROPEEN**

(45) Date de publication et mention
de la délivrance du brevet:
**06.03.2019 Bulletin 2019/10**

(51) Int Cl.:
***G08G 1/16*** (2006.01)

(21) Numéro de dépôt: **17192163.8**

(22) Date de dépôt: **20.09.2017**

(54) **PROCÉDÉ DE PROJECTION D'UNE IMAGE PAR UN SYSTÈME DE PROJECTION D'UN VÉHICULE AUTOMOBILE, ET SYSTÈME DE PROJECTION ASSOCIÉ**

VERFAHREN ZUR PROJEKTION EINES BILDES MITHILFE EINES PROJEKTIONSSYSTEMS EINES KRAFTFAHRZEUGS, UND ENTSPRECHENDES PROJEKTIONSSYSTEM

METHOD FOR PROJECTING AN IMAGE BY A PROJECTION SYSTEM OF A MOTOR VEHICLE, AND ASSOCIATED PROJECTION SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.09.2016 FR 1659286**

(43) Date de publication de la demande:
**11.04.2018 Bulletin 2018/15**

(73) Titulaire: **Valeo Vision**
**93012 Bobigny Cedex (FR)**

(72) Inventeurs:
• **MOREL, Xavier**
**93012 BOBIGNY Cedex (FR)**
• **SOMMERSCHUH, Stephan**
**93012 BOBIGNY Cedex (FR)**
• **EL IDRISSI, Hafid**
**93012 BOBIGNY CEDEX (FR)**
• **LUO, Weicheng**
**93012 BOBIGNY Cedex (FR)**

(74) Mandataire: **Valeo Vision**
**IP Department**
**34, rue Saint André**
**93012 Bobigny (FR)**

(56) Documents cités:
**EP-A1- 2 896 937        WO-A1-00/35200**
**US-A1- 2014 049 384**

**Description**

La présente invention se situe dans le domaine de la sécurité routière et de l'éclairage automobile.

Il arrive que les chaussées soient perturbées par des travaux de réfection des routes, des travaux de délayage des arbustes plantés sur les bas-côtés ou sur le terre-plein central, l'entretient des marquages au sol, ou tout simplement par des aspérités au sol tels que des creux ou des nids de poule.

Ces perturbations sont généralement signalées par des panneaux de signalisation. Néanmoins, les conducteurs sont souvent surpris par l'apparition de ces zones de perturbation et ont des difficultés pour réaliser rapidement un changement de voie, un décalage de leur véhicule par rapport à leur ligne de conduite ou tout simplement pour adapter suffisamment rapidement leur vitesse de conduite.

En conséquence, des accidents sont parfois occasionnés par ces zones de perturbation sur les routes. Il est souhaitable de renforcer la signalisation des zones de perturbation par une signalisation complémentaire.

A cet effet, l'invention a pour objet un procédé de projection d'au moins une image par un système de projection d'un véhicule automobile comportant un dispositif de détection propre à détecter une zone de perturbation et à générer un signal d'alerte, une unité de traitement propre à générer un signal de commande ; un dispositif imageur propre à recevoir le signal de commande et projeter une image numérique, une unité de stockage stockant au moins une image représentative d'un pictogramme, caractérisé en ce que le procédé comporte les étapes suivantes :

a) détection d'une zone de perturbation,

b) émission d'un signal d'alerte, et

sur réception du signal d'alerte :

c) génération d'un signal de commande, ladite étape de génération comportant les sous-étapes suivantes :

- détermination de la position du conducteur dans un référentiel prédéfini dit référentiel de projection ,
- calcul d'une matrice de transformation d'une image en fonction de la position du conducteur déterminée,
- génération du signal de commande, le signal de commande étant obtenu par application de ladite matrice de transformation à au moins une image stockée,

d) commande du dispositif imageur à partir du signal de commande pour projeter une image transformée, le pictogramme apparaissant dans un plan vertical pour ledit conducteur dans l'image transformée, et

e) projection de l'image transformée.

Avantageusement, le procédé de projection et le système de projection selon l'invention offrent une signalisation complémentaire qui peut être facilement et rapidement retirée.

Cette signalisation complémentaire est particulièrement adaptée à des zones de perturbation temporaire telles que les zones de perturbation occasionnées par des travaux, des coulées de boue ou de cailloux, le stationnement sur la voie d'un véhicule en panne, les accidents de voiture etc.

Selon des modes de réalisation particulier, le procédé de projection selon l'invention comporte l'une ou plusieurs ses caractéristiques suivantes :

- la matrice de transformation est conformée pour faire pivoter l'image stockée d'un angle de 90° par rapport à un axe horizontal A s'étendant sur la chaussée, ledit axe horizontale étant perpendiculairement à la direction de déplacement du véhicule.
- l'étape de génération d'un signal de commande comporte en outre une étape d'ajout d'au moins une zone d'ombre sur ladite image transformée de sorte que le pictogramme représenté sur l'image transformée soit perçu en relief par ledit conducteur.
- le dispositif de détection comporte un récepteur propre à recevoir un signal électromagnétique, et un système de localisation géographique du véhicule automobile, et dans lequel l'étape de la détection de la zone de perturbation comprend les étapes suivantes :

  - détermination de la position géographique du véhicule automobile ;
  - réception d'un signal électromagnétique propre à indiquer au moins une zone de perturbation sur la chaussée ;
  - détermination de la possibilité de passage du véhicule automobile dans la zone de perturbation ;
  - élaboration d'un signal d'alerte lorsque le véhicule automobile va traverser la zone de perturbation.

- le signal électromagnétique est un signal radioélectrique parmi un signal radiophonique, un signal d'un réseau de télécommunication sans fil et un signal d'un réseau informatique régie par le protocole de communication défini par les normes du groupe IEEE 802.11.

- le signal électromagnétique est un signal lumineux par exemple un signal ayant une longueur d'onde comprise entre 400 et 800 nanomètres.
- le système de projection comporte une caméra, et dans lequel l'étape de détection comprend les étapes suivantes :
- acquisition d'au moins une image représentative de la chaussée par la dite caméra, et
- traitement de ladite au moins une image acquise pour détecter l'existence d'une zone de perturbation
- élaboration d'un signal d'alerte.
- le pictogramme est une image représentative d'un élément parmi un plot routier, un panneau de signalisation routière, des lignes ou des flèches de guidage et des piquets de chantier.
- Le procédé comporte en outre une étape de capture d'une image du conducteur automobile et dans lequel l'étape de détermination de la position du conducteur est mise en oeuvre à partir de l'image capturée.

L'invention concerne également un système de projection d'au moins une image d'un véhicule automobile, ledit système de projection comportant :

- une unité de stockage apte à stocker au moins une image représentant un pictogramme ;
- un dispositif de détection propre à détecter une zone de perturbation, ledit dispositif de détection étant adaptée à générer un signal d'alerte sur détection de la zone de perturbation,
- une unité de traitement connectée au dispositif de détection, l'unité de traitement étant propre à calculer une matrice de transformation en fonction de la position du conducteur définie dans un référentiel prédéfini dit référentiel de projection, et à générer un signal de commande à partir de la matrice de transformation et de l'image stockée, et
- un dispositif imageur propre à projeter au moins une image transformée à partir de signal de commande réceptionné, l'image transformée étant destinée à apparaître dans un plan vertical pour ledit conducteur du véhicule automobile.

En variante, le système de projection comporte une source lumineuse apte à émettre un faisceau lumineux en direction du dispositif imageur, et un dispositif de projection apte à projeter sur la chaussée l'image transformée.

En variante, le système de projection comporte un imageur apte à capturer le conducteur automobile et dans lequel l'unité de traitement est apte à rechercher la position du conducteur sur l'image capturée et à définir la matrice de transformation M à partir de la position du conducteur déterminée.

L'invention sera mieux comprise à la lecture de la description qui va suivre, donnée uniquement à titre d'exemple et faite en se référant aux figures sur lesquelles :

- la figure 1 est une vue schématique du système de projection selon un premier mode de réalisation de l'invention,
- la figure 2 est un diagramme représentant les principales étapes du procédé de projection selon l'invention,
- la figure 3 est un diagramme représentant les étapes d'un premier mode de réalisation de l'étape de détection du procédé de projection selon l'invention,
- la figure 4 est une vue de côté d'un véhicule équipé d'un système de projection selon l'invention,
- la figure 5 est une vue en perspective de plots pouvant être imagés par le procédé de projection selon la présente invention,
- la figure 6 est un diagramme représentant les étapes d'un deuxième mode de réalisation de l'étape de détection du procédé de projection selon l'invention, et
- les figures 7 à 23 sont des figures de la demande de brevet PCT/EP2016/071596 déposée le 13 septembre 2016.

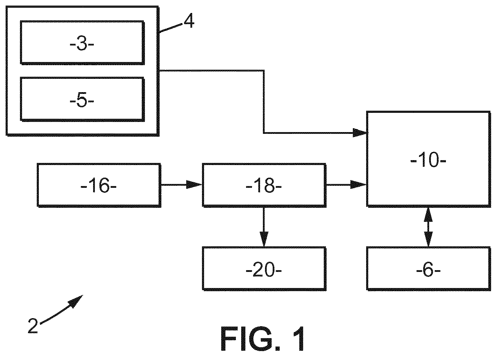

Le procédé de projection selon la présente invention est mis en oeuvre par un système de projection 2 représenté schématiquement sur la figure 1.

Ce système de projection 2 comporte un dispositif de détection 4 de la présence d'une zone de perturbation, une unité de stockage 6 propre à stocker des images à projeter ainsi que des coordonnées de la position du conducteur et une unité de traitement 10 connectée au dispositif de détection 4, à l'unité de stockage 6 et à l'imageur 8.

Le dispositif de détection peut être réalisé selon deux modes de réalisation différents.

Selon un premier mode de réalisation de l'invention, le dispositif de détection 4 comporte un récepteur 3 propre à recevoir un signal électromagnétique émis par une borne distante extérieure au véhicule, et un système 5 de localisation géographique du véhicule.

Le récepteur 3 peut, par exemple, être constitué par un autoradio. Dans ce cas, le signal électromagnétique est un signal radiophonique, par exemple un signal « TMC » (acronyme du terme « Traffic Message Channel » en anglais). Le TMC est une norme européenne qui permet de diffuser des informations de circulation aux automobilistes, généralement par l'intermédiaire du système RDS (acronyme du terme « Radio Data System » en anglais) dans la bande de fréquence radio « FM ». La borne distante est le dispositif d'émission de la radio.

Le récepteur 3 peut également être constitué par un récepteur de type téléphone mobile. Dans ce cas, le signal électromagnétique est un signal du réseau de téléphonie mobile, par exemple un signal « GSM » (acronyme du terme « Global System for Mobile communication » en anglais), un signal « GPRS » (acronyme du terme « Global Packet Radio Service » en anglais), ou un signal « UMTS » (acronyme du terme «Universal Mobile Telecommunication System » en anglais). Le réseau de télécommunication sans fil est, par exemple, défini par la norme « 3G » ou « 4G ».

Le récepteur 3 peut, en outre, être constitué par un récepteur de type ordinateur ou tablette. Dans ce cas, le signal électromagnétique est un signal d'un réseau informatique régie par un protocole de communication du type de celui défini par la norme IEEE 802.11, par exemple le signal « Wi-Fi » (acronyme du terme « Wireless Fidelity » en anglais).

Enfin, le récepteur 3 peut être constitué par une caméra. Le signal électromagnétique est alors un signal lumineux de type « VLC » (acronyme du terme « Visible Light Communicvation» en anglais). Ce signal présente une longueur d'onde comprise entre 400 et 700 nanomètres. Il peut être émis par des feux de circulation ou des infrastructures d'éclairage de la voirie tels que des lampadaires.

Le système de localisation 5 est propre à déterminer la position géographique du véhicule. Il est par exemple constitué par un dispositif « GPS » (acronyme du terme « Global Positionning System » en anglais).

Selon un deuxième mode de réalisation de l'invention non représenté, le dispositif de détection 4 comporte une caméra apte à imager la chaussée et un processeur connecté à la caméra et propre à analyser les images captées par la caméra pour déterminer la présence d'une aspérité sur la chaussé tel que par exemple la présence d'un trou sur la chaussée.

L'unité de stockage 6 est une mémoire de type ROM, UVPROM, PROM, EPROM ou EEPROM. Elle est propre à stocker des images chacune représentative d'un pictogramme. Un pictogramme est un signe graphique représentatif d'une situation dont le sens est susceptible d'être compris rapidement. Le pictogramme comporte un dessin figuratif et/ou des symboles alphanumériques. Les pictogrammes peuvent par exemple représenter un ou plusieurs plots routiers, un panneau de signalisation routière, des lignes ou des flèches de guidage ou des piquets de chantier.

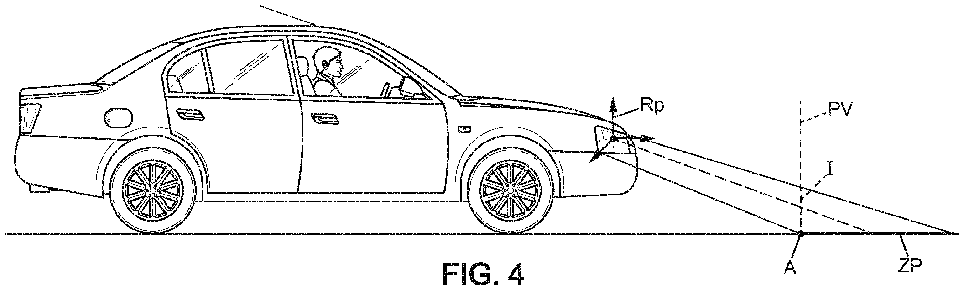

L'unité de stockage 6 est également apte à stocker les coordonnées de la position du conducteur dans un référentiel prédéfini, dit référentiel de projection Rp. Ce référentiel Rp a été représenté sur la figure 4. En particulier, l'unité de stockage 6 stocke les coordonnées de la position des yeux du conducteur dans ce référentiel Rp. Cette position est une position moyenne établie à partir de la, position des yeux de plusieurs conducteurs ayant différentes tailles ou différentes corpulences.

L'unité de traitement 10 est une unité de calcul de type processeur.

Le système de projection 2 selon l'invention comporte en outre une source lumineuse 16 propre à émettre un faisceau lumineux, un dispositif imageur 18 propre à imager une image numérique à partir du faisceau lumineux issu de la source lumineuse 16 et du signal de commande, et un dispositif de projection 20 conformé pour projeter l'image sur la chaussée.

La source lumineuse 16 est, par exemple, constituée par une diode électroluminescente et un collimateur. En variante, la diode électroluminescente est remplacée par une source laser.

Le dispositif imageur 18 est, par exemple, constitué par une matrice de micro-miroirs. La matrice de micro-miroirs est généralement désignée par l'acronyme DMD (de l'anglais « Digital Micro-mirror Device »). Elle comprend un grand nombre de micro-miroirs répartis selon des lignes et des colonnes. Chaque micro-miroir est propre à recevoir une partie du faisceau lumineux émis par la source lumineuse 16 et à la réfléchir en direction du dispositif de projection 20 ou en direction d'un absorbeur de lumière. L'ensemble des micro-miroirs est adapté pour projeter une image numérique.

Le dispositif de projection 20 comprend généralement une lentille d'entrée et une lentille de sortie. Ces lentilles sont réalisées en matière plastique et/ou en verre. La lentille de sortie est par exemple une lentille convergente.

Selon une variante non représentée, l'unité de stockage 6 ne comporte pas les coordonnées de la position du conducteur dans le référentiel de projection Rp. Selon cette variante, le système de projection comporte un imageur connecté à l'unité de traitement. L'imageur est apte à imager le conducteur du véhicule automobile. L'imageur est, par exemple, constitué par une caméra ou un appareil photo. La caméra du dispositif anti-endormissement (appelé en anglais « driver monitoring) pourrait être utilisée. L'unité de traitement est apte à rechercher la position du conducteur sur l'image capturée par traitement d'image. Ce traitement d'image est réalisé par exemple à l'aide d'une détection de contour. En particulier, l'unité de traitement recherche la position des yeux du conducteur sur l'image capturée. Puis, la position des yeux du conducteur est définie dans un référentiel situé sur le dispositif de projection Rp.

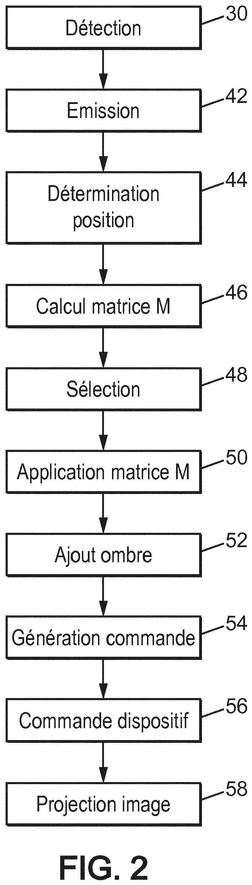

En référence à la figure 2, le procédé de projection selon la présente invention débute par une étape 30 de détection d'une zone de perturbation.

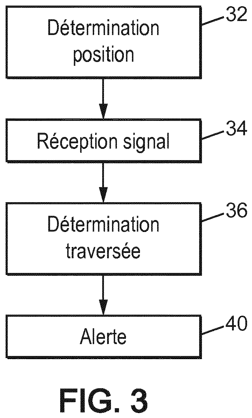

Cette étape de détection 30 peut être réalisée selon deux modes de réalisation. Selon le premier mode de réalisation de l'invention illustré sur la figure 3, l'étape de détection comporte une étape 32 de détermination de la position géographique du véhicule automobile. Cette position géographique est définie sur une cartographie routière telle que celle généralement utilisée dans les dispositifs GPS.

Au cours d'une étape 34, le dispositif de détection 4 réceptionne un signal électromagnétique propre à indiquer une zone géographique de perturbation sur la chaussée, ainsi qu'une information relative au type de perturbation.

Au cours d'une étape 36, le dispositif de détection détermine si le véhicule va traverser la zone de perturbation 38 détectée par le dispositif de détection 4. Si tel est le cas, le dispositif de détection 4 élabore un signal d'alerte au cours d'une étape 40.

Au cours d'une étape 42, le dispositif de détection 4 émet le signal d'alerte vers l'unité de traitement 10. Le message d'alerte contient l'information du type de perturbation et de sa localisation précise sur la chaussée par exemple perturbation uniquement sur la bas-côté ou sur le terre-plein central ou perturbation sur la voie de droite.

Sur réception de ce signal d'alerte, la position du conducteur est déterminée dans le référentiel de projection Rp, au cours d'une étape 44. Cette détermination est réalisée par recherche de coordonnées dans l'unité de stockage 6. En particulier, les coordonnées de la position des yeux du conducteur sont recherchées.

Au cours d'une étape 46, l'unité de traitement 10 est apte à calculer une matrice de transformation M en fonction de la position des yeux du conducteur dans le référentiel de projection Rp. Cette matrice de transformation M est conformée de manière à générer une image transformée. L'image transformée apparait pour le conducteur comme si elle s'étendait dans un plan vertical PV, comme représenté sur la figure 4. La matrice de transformation M est conformée pour faire pivoter l'image stockée d'un angle de 90° par rapport à un axe horizontal A s'étendant sur la chaussée perpendiculairement à la direction de déplacement du véhicule. Ainsi, le conducteur du véhicule n'a pas l'impression de visualiser une image s'étendant à plat sur la chaussée dans la zone ZP définie en gras sur la figure 4, mais il a l'impression de visualiser une image qui s'étendrait verticalement sur la zone référencée I sur la figure 4. En réalité, l'image est bien projetée sur la zone ZP de la chaussée.

Une manière de calculer cette matrice de transformation a fait l'objet du dépôt d'une précédente demande de brevet le 13 septembre 2016 sous le numéro PCT/EP2016/071596. Cette précédente demande de brevet n'a pas encore été publiée. Cette demande de brevet antérieure a été copiée à la fin de la description de la présente demande de brevet pour donner un exemple de mise en oeuvre de la présente invention.

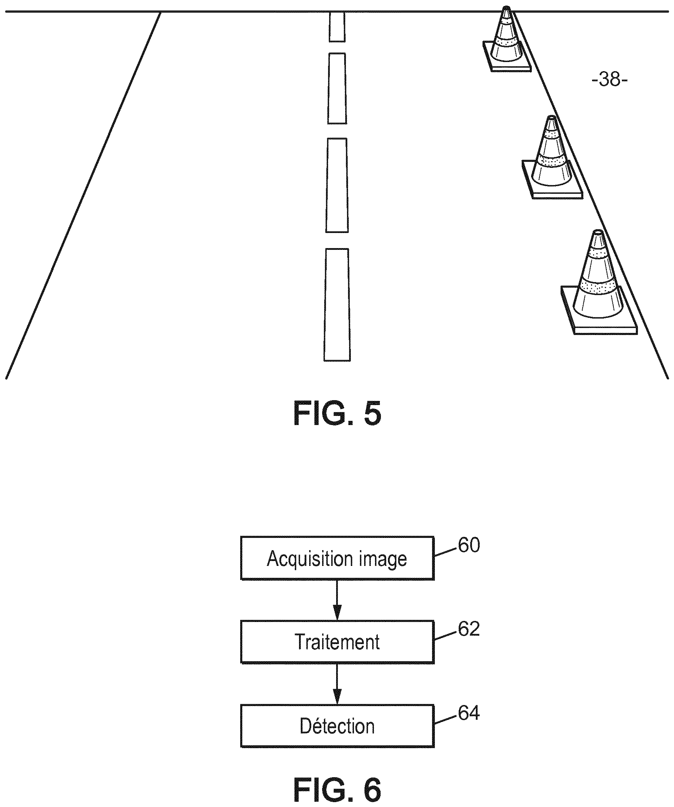

Au cours d'une étape 48, l'unité de traitement 10 sélectionne une image représentative d'un pictogramme particulier parmi l'ensemble des images stockée dans l'unité de stockage en fonction des informations contenues dans le message d'alerte transmis par le dispositif de détection 4. L'image sélectionnée est transmise de l'unité de stockage 6 vers l'unité de traitement 10. Ainsi, lorsque la perturbation est relative à des travaux le long des bas-côtés de la chaussée, l'unité de traitement 10 sélectionne une image représentative d'un alignement de plots routiers, comme représenté sur la figure 5.

Au cours d'une étape 50, la matrice de transformation M est appliquée à l'image provenant de l'unité de stockage. Cette application est réalisée par multiplication de la matrice de transformation par l'image stockée. Cette multiplication permet de déformer l'image projetée pour donner une image transformée. L'image transformée donne l'impression visuelle d'un véritable objet en forme de pictogramme posé sur la chaussée et s'étendant verticalement. Cette application est réalisée par multiplication de la matrice de transformation par l'image stockée.

Au cours d'une étape 52, l'unité de traitement 10 ajoute des zones d'ombre sur l'image transformée pour donner l'impression visuelle au conducteur que le pictogramme représenté sur l'image transformée soit en relief. Cet ajout d'ombre est réalisé par des techniques de traitement d'images connues.

La figure 5 illustre ainsi un exemple de l'impression visuelle perçue par le conducteur du véhicule automobile de trois plots routiers bordant le bas -côté de la chaussée. Cette impression visuelle est obtenue par la mise en oeuvre du procédé de projection selon la présente invention.

Au cours d'une étape 54, l'unité de traitement génère un signal de commande représentatif de l'image transformée.

Au cours d'une étape 56, le signal de commande est transmis au dispositif imageur 18 qui image l'image transformée et la projette vers le dispositif de projection 20.

Au cours d'une étape 58, le dispositif de projection 20 projette l'image transformée sur la chaussée. Le pictogramme projeté apparait dans un plan vertical PV pour le conducteur. Les autres observateurs tels que les passagers du véhicule ou les personnes à l'extérieur du véhicule visualisent une image déformée. Elles ne perçoivent pas forcément le pictogramme.

L'étape de détection 30 peut être mise en oeuvre par le dispositif de détection selon le second mode de réalisation de l'invention. Dans ce cas, l'étape de détection comporte, en référence à la figure 6, une étape d'acquisition 60 d'au moins une image représentative de la chaussée par une caméra fixée à l'avant du véhicule.

L'image acquise est transmise au dispositif de détection 4. Au cours d'une étape 62, le dispositif de détection traite cette image pour déterminer s'il existe une aspérité sur le sol de type nid de poule.

En cas de présence d'une aspérité, le dispositif de détection 4 détecte l'existence d'une zone de perturbation et élabore un signal d'alerte au cours d'une étape 64. Le signal d'alerte contient l'information du type de perturbation. Le signal d'alerte est transmis à l'unité de traitement 10 et les étapes du procédé de projection se poursuivent de la même manière que décrit ci-dessus pour le procédé de projection selon le premier mode de réalisation de l'invention.

Selon une variante de l'étape 44 non représentée, l'unité de traitement 10 commande un imageur afin qu'il acquiert une image du conducteur assis dans le véhicule automobile. La ou les images capturées sont transmises à l'unité de traitement 10.

Puis, la position du conducteur et en particulier la position des yeux du conducteur est recherchée sur l'image capturée par traitement d'image. Ce traitement d'image est réalisé par l'unité de traitement 10 par exemple à l'aide d'une détection de contour. Puis, la position des yeux du conducteur est définie dans un référentiel situé sur le dispositif de projection 10. Ce référentiel est appelé référentiel de projection Rp. Il est représenté sur la figure 4.

Selon une variante particulièrement avantageuse, le profil de contraste du pictogramme projeté est renforcé par rapport à l'ambiance lumineuse moyenne du faisceau d'arrière-plan, sur lequel ou dans lequel le pictogramme est inclus.

A cette fin, les bordures du pictogramme, depuis l'extérieur de celui-ci vers l'intérieur et dans au moins une dimension (largeur ou hauteur) du plan de projection du pictogramme, présentent une alternance d'au moins deux zones d'intensité différentes par rapport à l'intensité moyenne du faisceau d'arrière plan, une première zone étant d'intensité plus forte ou plus faible par rapport à cette intensité moyenne et la seconde zone étant respectivement d'intensité plus faible ou plus forte par rapport à cette intensité moyenne. Dans une variante d'exécution, la seconde zone constitue le coeur ou zone centrale du pictogramme et est alors bordée au moins dans une dimension par la première zone.

Ainsi, la perception par le conducteur ou des tiers du message constitué par le pictogramme projeté est renforcée, le temps de réaction par rapport au message projeté est diminué et la sécurité de conduite est de fait améliorée.

Le gradient d'intensité et le niveau d'intensité appliqués peuvent être constants ou varier le long du motif selon une direction de la dimension de projection considérée (largeur ou hauteur, par exemple respectivement de la gauche vers la droite ou depuis le bas vers le haut, correspondant à une projection dans une zone de champ proche du véhicule vers l'horizon, par exemple dans une plage entre 5 à 30 mètres devant le véhicule). En outre, cette variation peut être statique ou dynamique, c'est-à-dire pilotée en fonction de l'environnement du véhicule : par exemple, en fonction de l'imminence d'un événement, on pourra diminuer ou renforcer dynamiquement le contraste, de sorte à générer un effet d'ondulation du motif qui apparaitra plus ou moins net dans le faisceau d'arrière-plan et à attirer l'attention du conducteur ou des tiers sur l'imminence de l'événement correspondant au pictogramme projeté (flèche de sortie ou de virage, alerte collision, piéton qui traverse, etc). On améliore ainsi encore davantage la sécurité de conduite.

Nous avons copié ci-dessous la demande de brevet numéro PCT/EP2016/071596 .

La demande de brevet PCT/EP2016/071596 et ses différentes applications seront mieux comprises à la lecture de la description qui suit et à l'examen des figures qui l'accompagnent.

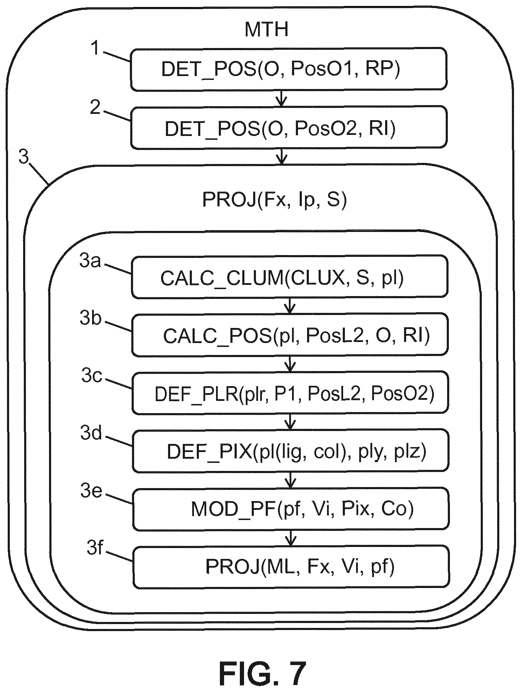

- la figure 7 représente un organigramme des étapes du procédé de projection d'au moins une image sur une surface de projection selon un mode de réalisation non limitatif de la demande de brevet PCT/EP2016/071596 ;

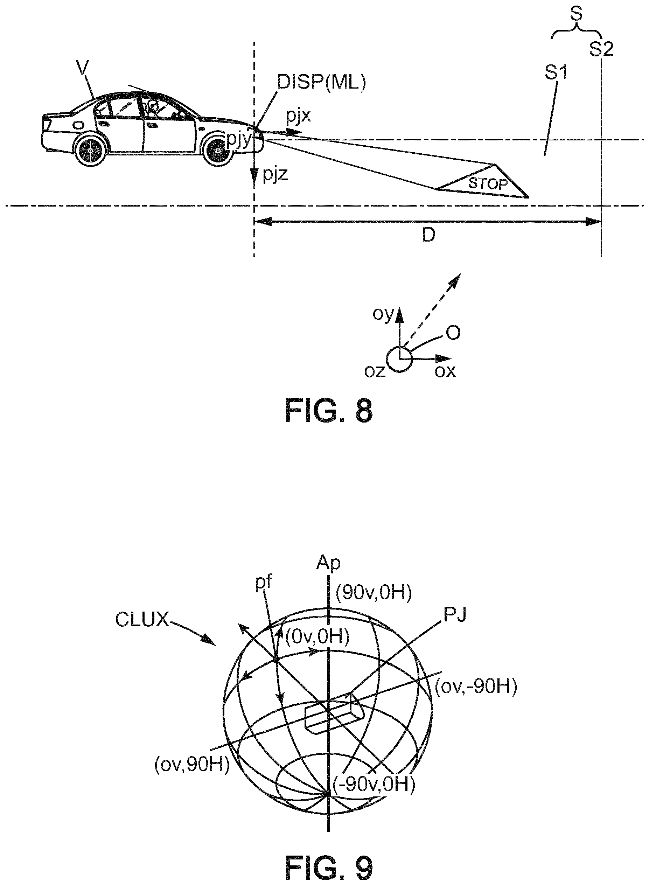

- la figure 8 représente un véhicule automobile comprenant un dispositif d'éclairage adapté pour mettre en oeuvre le procédé de projection de la figure 7 selon un mode de réalisation non limitatif de la demande de brevet PCT/EP2016/071596;
- la figure 9 représente une carte d'intensité lumineuse établie selon une étape du procédé de projection de la figure 7 selon un mode de réalisation non limitatif de la demande de brevet PCT/EP2016/071596;

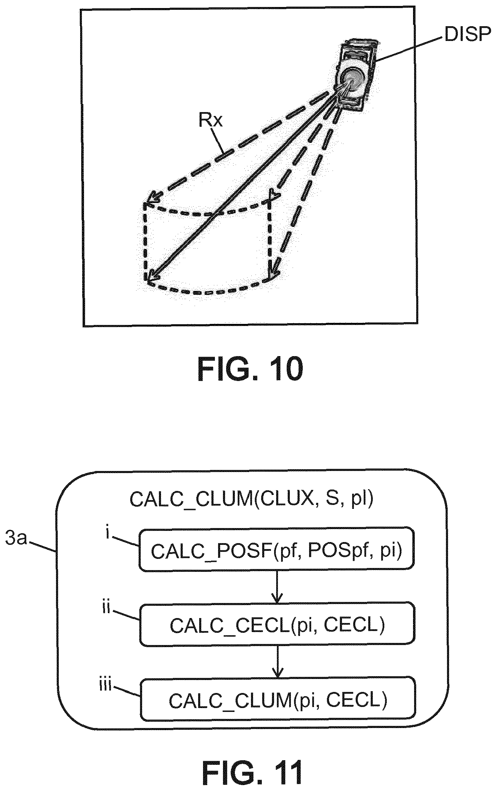

- la figure 10 représente un projecteur qui intègre un module lumineux et la direction d'un rayon lumineux d'un module lumineux dudit projecteur, ledit module lumineux étant adapté pour réaliser au moins une étape du procédé de projection de la figure 7 ;
- la figure 11 représente un organigramme illustrant des sous-étapes d'une étape d'établissement d'une carte de luminance du procédé de projection de la figure 7 selon un mode de réalisation non limitatif de la demande de brevet PCT/EP2016/071596;

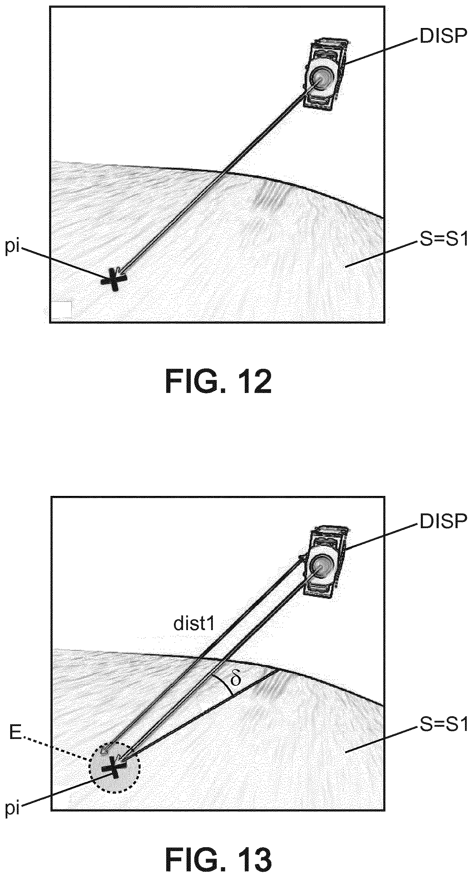

- la figure 12 représente le projecteur de la figure 10 et un point d'impact du rayon lumineux sur le sol ;
- la figure 13 représente le projecteur de la figure 12 et l'éclairement du point d'impact ;

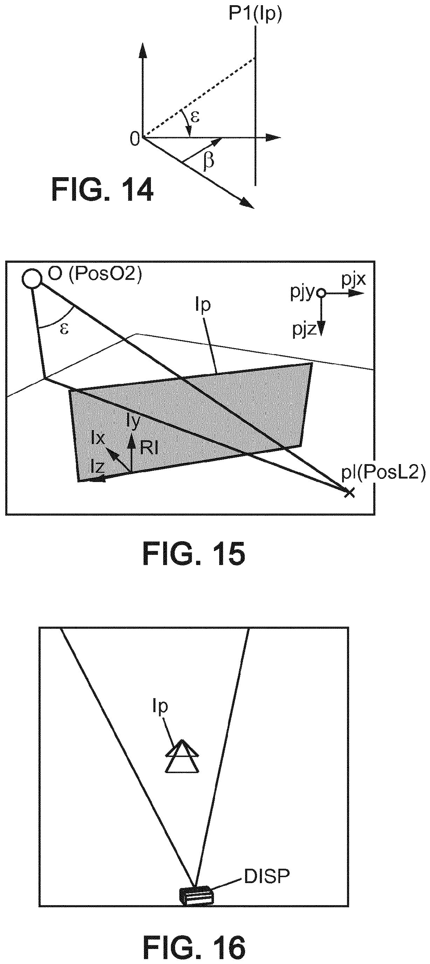

- la figure 14 indique l'angle site et l'angle azimut pris en compte dans une étape de calcul de la position d'observation d'un observateur du procédé de projection de la figure 7 ;
- la figure 15 représente schématiquement un point d'impact, une position d'observation d'un observateur extérieur au véhicule automobile dans un référentiel image et une image à projeter par le procédé de projection de la figure 7 ;
- la figure 16 illustre une image projetée selon le procédé de projection de la figure 7, image qui est vue du point de vue du conducteur dudit véhicule automobile mais qui est seulement compréhensible par un observateur extérieur au véhicule automobile ;

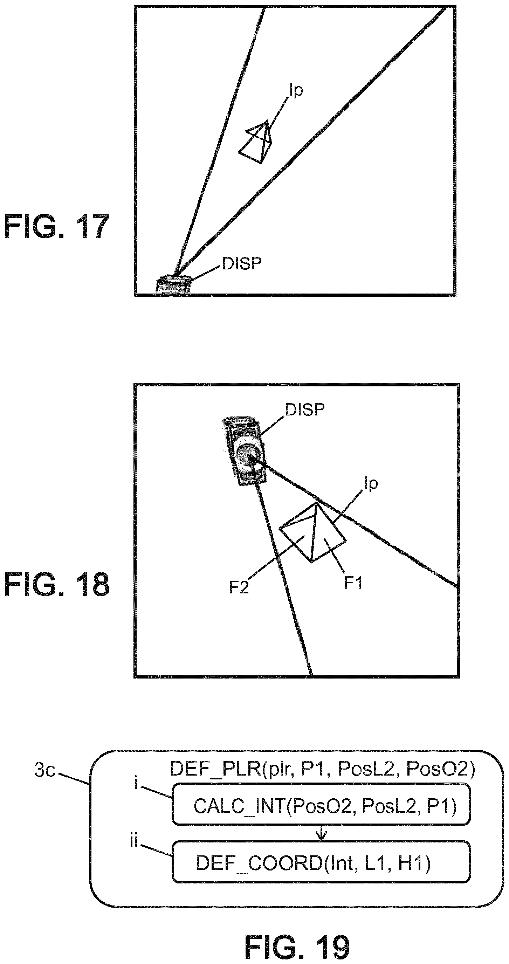

- la figure 17 illustre une image projetée selon le procédé de projection de la figure 7, image qui est vue du point de vue d'un passager arrière dudit véhicule automobile mais qui est seulement compréhensible par un observateur extérieur au véhicule automobile ;
- la figure 18 illustre une image projetée selon le procédé de projection de la figure 7, image qui est vue du point de vue dudit observateur extérieur au véhicule automobile et qui est compréhensible par ledit observateur extérieur au véhicule automobile ;

- la figure 19 représente un organigramme illustrant des sous-étapes d'une étape de définition des coordonnées d'une projection d'un point de luminance du procédé de projection de la figure 7 selon un mode de réalisation non limitatif de la demande de brevet PCT/EP2016/071596 ;

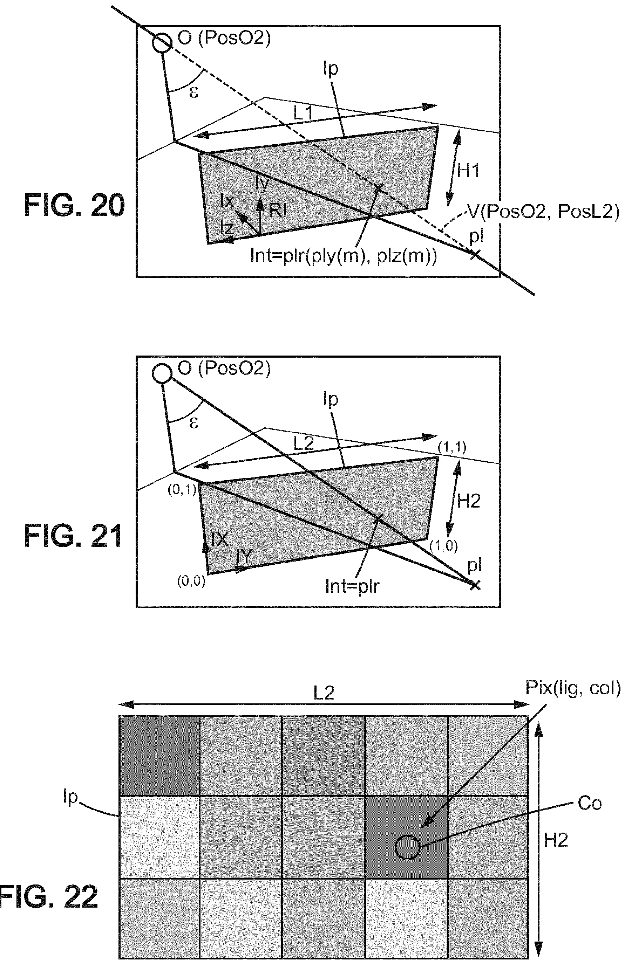

- la figure 20 représente schématiquement le point d'impact, la position d'observation de l'observateur extérieur au véhicule automobile et l'image à projeter de la figure 15 par le procédé de projection de la figure 7 et les coordonnées de l'intersection entre le point d'impact et l'image à projeter ;
- la figure 21 représente schématiquement le point d'impact, la position d'observation de l'observateur extérieur au véhicule automobile et l'image à projeter de la figure 20 normalisée ; et
- la figure 22 représente schématiquement des pixels de l'image à projeter de la figure 20 ; et

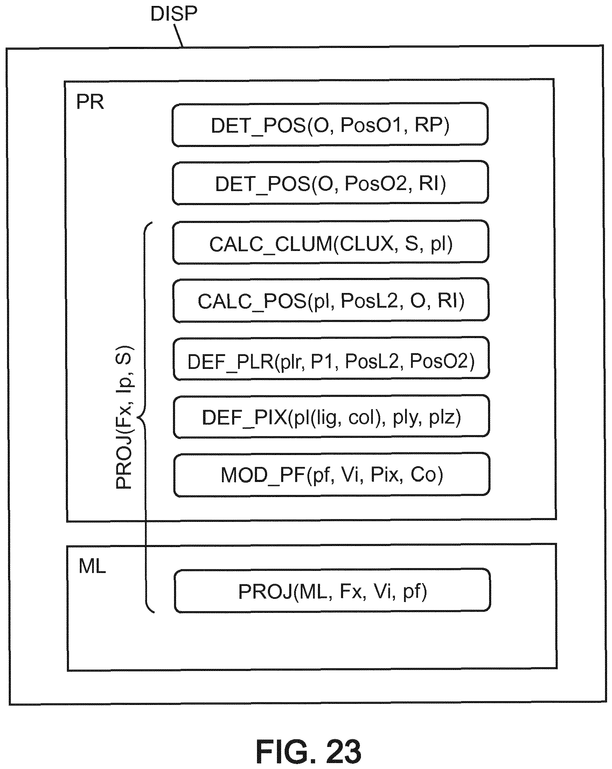

- la figure 23 illustre un dispositif d'éclairage adapté pour mettre en oeuvre le procédé de projection de la figure 7.

DESCRIPTION DE MODES DE REALISATION DE LA DEMANDE DE BREVET PCT/EP2016/071596

Les éléments identiques, par structure ou par fonction, apparaissant sur différentes figures conservent, sauf précision contraire, les mêmes références.

Le procédé de projection MTH pour véhicule automobile d'au moins une image sur une surface de projection au moyen d'un module lumineux ML selon la demande de brevet PCT/EP2016/071596 est décrit en référence aux figures 7 à 23.

Par véhicule automobile, on entend tout type de véhicule motorisé.

Tel qu'illustré sur la figure 7, le procédé MTH comprend les étapes de :

- détecter une position d'observation PosO1 d'un observateur O dans un référentiel module lumineux RP (étape illustrée DET_POS(O, PosO1, RP)) ;
- calculer la position d'observation PosO2 de l'observateur O dans un référentiel image RI (étape illustrée DET_POS(O, PosO2, RI));
- projeter ladite image Ip sur ladite surface de projection S en fonction de ladite position d'observation PosO2 de l'observateur O dans ledit référentiel image RI, ladite image Ip étant intégrée dans ledit faisceau lumineux Fx du module lumineux ML (étape illustrée PROJ(Fx, Ip, S)).

Tel qu'illustré sur la figure 7, la projection de ladite image Ip comporte les sous-étapes de :

- 3a) à partir d'une carte d'intensité lumineuse CLUX du module lumineux ML comprenant une pluralité d'indicatrices d'intensité pf,
  calculer une cartographie de luminance CLUM sur la surface de projection S résultant en des points de luminance pl (étape illustrée CALC_CLUM(CLUX, S, pl)) ;
- 3b) calculer la position PosL2 de chaque point de luminance pl dans le référentiel image RI (étape illustrée CALC_POS(pl, PosL2, O, RI)) ;
- 3c) à partir de sa position PosL2 et de la position d'observation PosO2 de l'observateur O dans ledit référentiel image RI, définir les coordonnées ply, plz de la projection plr de chaque point de luminance pl dans le plan image P1 de ladite image à projeter Ip (étape illustrée DEF_PLR(plr, P1, PosL2, PosO2)) ;
- 3d) si ladite projection plr appartient à ladite image à projeter Ip, définir des coordonnées lig, col du pixel Pix correspondant (étape illustrée DEF_PIX(pl(lig, col), ply, plz) ;
- 3e) pour chaque projection plr d'un point de luminance pl appartenant à ladite image à projeter Ip, corriger la valeur d'intensité Vi de l'indicatrice d'intensité correspondant pf en fonction de la couleur Co du pixel correspondant Pix (étape illustrée MOD_PF(pf, Vi, Pix, Co)).

A noter que la première étape 3a notamment, de même que l'étape 3b notamment, peuvent être réalisées préalablement aux itérations des étapes suivantes. Plus généralement, les étapes décrites ne sont pas nécessairement réalisées de manière séquentielle, i.e. dans une même boucle d'itération, mais peuvent faire l'objet d'itérations différentes, avec des fréquences d'itérations différentes.

L'étape de projection de l'image Ip comprend en outre une sous-étape 3f) de projeter sur la surface de projection S le faisceau lumineux Fx avec les valeurs d'intensité Vi corrigées des indicatrices d'intensité pf (étape illustrée sur la figure 7 PROJ(ML, Fx, Vi, pf)).

Le procédé de projection MTH est adapté pour projeter une ou plusieurs images Ip en même temps. Dans la suite de la description, la projection d'une seule image est prise comme exemple non limitatif.

On notera que la projection peut se faire à l'avant du véhicule automobile V, à l'arrière ou sur ses côtés.

Le module lumineux ML permet de produire un faisceau lumineux Fx, ledit faisceau lumineux Fx comprenant une pluralité de rayons lumineux Rx qui suivent différentes directions.

Le module lumineux ML permet de modifier la valeur d'intensité Vi de chaque indicatrice d'intensité pf, c'est donc un module lumineux digitalisé. Comme décrit ci-après, on intègre ainsi l'image à projeter Ip dans le faisceau lumineux Fx du module lumineux ML.

On notera que la carte d'intensité lumineuse CLUX est discrétisée pour pouvoir être exploitée numériquement.

Le module lumineux ML est considéré comme une source lumineuse ponctuelle à partir de laquelle on discrétise l'espace autour de ladite source lumineuse. Ainsi, une indicatrice d'intensité pf est un point de l'espace éclairé par le module lumineux ML qui comporte une certaine direction dir1 et une valeur d'intensité Vi donnée procurée par le module lumineux ML dans ladite direction dir1. La direction dir1 est donnée par deux angles θ et δ (décrits plus loin).

Dans un mode de réalisation non limitatif, la surface de projection S est le sol (référencé S1) ou un mur (référencé S2). L'image qui sera projetée Ip sur le sol ou le mur est ainsi une image en 2D.

Dans un mode de réalisation non limitatif illustré sur la figure 8, un dispositif d'éclairage DISP du véhicule automobile V comprend au moins un module lumineux ML et est adapté pour mettre en oeuvre le procédé de projection MTH. Dans l'exemple non limitatif illustré, le dispositif d'éclairage est un projecteur.

Comme on va le voir ci-après, la position d'observation de l'observateur O est prise en compte pour la projection de l'image à projeter Ip. A cet effet, l'image à projeter Ip sera déformée de sorte qu'elle soit compréhensible par l'observateur en question, que ce soit le conducteur ou un passager avant ou arrière du véhicule automobile ou un observateur extérieur au véhicule automobile.

On se place ainsi du point de vue de l'observateur O pour qui l'on veut projeter l'image Ip. Du point de vue de l'observateur, l'image Ip ne sera pas déformée. D'un point de vue différent dudit observateur, l'image Ip sera déformée.

Dans des exemples de réalisation non limitatifs, un observateur O extérieur au véhicule est un piéton, un conducteur d'un autre véhicule automobile, un cycliste, un motard etc. Il peut se trouver à l'avant, à l'arrière ou sur un des côtés du véhicule automobile V.

Dans un mode de réalisation non limitatif, l'image projetée Ip comprend au moins un symbole graphique. Ce symbole graphique va permettre d'améliorer le confort et/ou la sécurité de l'observateur O. Dans un exemple non limitatif, si l'observateur O est le conducteur du véhicule automobile, le symbole graphique pourra représenter la vitesse limite à ne pas dépasser sur la route, un symbole graphique STOP lorsque le véhicule automobile recule et qu'un obstacle (piéton, mur etc.) se trouve trop près du véhicule automobile, une flèche qui l'aide lorsque le véhicule automobile est sur le point de tourner sur une route etc. Dans un exemple non limitatif, si l'observateur O est extérieur au véhicule automobile tel qu'un piéton ou un cycliste, le symbole graphique peut être un signal STOP pour lui indiquer qu'il ne doit pas traverser devant le véhicule automobile car ce dernier va redémarrer.

Dans un exemple non limitatif, si l'observateur O est extérieur au véhicule automobile tel qu'un véhicule automobile suiveur, le symbole graphique peut être un signal STOP lorsque le véhicule automobile considéré freine pour que le conducteur du véhicule suiveur freine à son tour. Dans un autre exemple non limitatif, si l'observateur O est extérieur au véhicule automobile et est un véhicule automobile qui dépasse sur le côté, le symbole graphique peut être un symbole d'avertissement pour indiquer audit véhicule automobile de se rabattre car un autre véhicule automobile arrive en face.

Tel qu'illustrée sur la figure 8, l'image projetée Ip est un symbole STOP. Elle est orientée sur la surface de projection S, ici le sol dans l'exemple non limitatif illustré, de telle manière que l'observateur O puisse voir et comprendre ce symbole STOP. Dans l'exemple non limitatif illustré, la projection se fait à l'avant du véhicule automobile V et l'observateur O est extérieur au véhicule automobile V.

Les différentes étapes du procédé de projection MTH sont décrites en détail ci-après.

• 1) Détection de la position d'observation de l'observateur dans le référentiel module lumineux RP

Pour détecter la position d'observation PosO1 de l'observateur O dans le référentiel module lumineux RP, il faut détecter la position de l'observateur O lui-même dans le référentiel module lumineux RP. A cet effet, dans un exemple non limitatif, une caméra (non illustrée) est utilisée. Elle est adaptée pour détecter et calculer la position d'un observateur O qui se trouve à l'extérieur du véhicule automobile V.

Dans des modes de réalisation non limitatifs, la caméra est remplacée par un radar, ou un lidar.

Pour un observateur O qui se trouve à l'intérieur du véhicule automobile (conducteur ou passagers), on considère par exemple des positions d'observation de référence. Ainsi, dans un exemple non limitatif, on considère que l'oeil du conducteur se situe à la position PosO1 (1,5 ;-0,5 ; 1) (exprimée en mètre) du module lumineux ML dans le cas d'un véhicule automobile qui est une voiture. Bien entendu, si le véhicule automobile est un camion, la position de l'oeil par rapport au module lumineux ML est différente.

Pour un observateur extérieur, à partir de la position dudit observateur O, on peut en déduire sa position d'observation PosO1 qui correspond à la position de son oeil. Par exemple, on situe la position de son oeil à environ 1,5 mètres par rapport au sol.

Une telle détection de la position de l'observateur étant connue de l'homme du métier, elle n'est pas décrite en détail ici.

• 2) Calcul de la position d'observation de l'observateur dans le référentiel image RI

La position d'observation PosO1 de l'observateur O a été déterminée précédemment selon le référentiel module lumineux RP. Elle va être utilisée pour le changement de repère décrit ci-après.

Cette étape effectue un changement de repère. On passe en effet du référentiel module lumineux RP (défini par les axes pjx, pjy, pjz) au référentiel image RI (défini par les axes Ix, Iy, Iz) de l'image à projeter Ip.

Le calcul de la position d'observation PosO2 de l'observateur O dans le référentiel image RI est basé sur au moins une matrice de transformation M du référentiel module lumineux RP vers ledit référentiel image RI.

Dans un mode de réalisation non limitatif, la position PosO2 est de la forme :

$$\begin{bmatrix} pjx \\ pjy \\ pjz \\ 1 \end{bmatrix}$$

Dans un mode de réalisation non limitatif, ladite au moins une matrice de transformation M prend en compte au moins un des paramètres suivants :

- la position PosIp de l'image à projeter Ip dans le référentiel module lumineux RP ;
- la rotation RotIp de l'image à projeter Ip dans le référentiel module lumineux RP ;
- l'échelle de l'image à projeter Ip

La position PosIp de l'image à projeter Ip se déduit du référentiel module lumineux RP selon une translation selon les trois axes pjx, pjy, pjz dudit référentiel module lumineux RP.

Dans un mode de réalisation non limitatif, la matrice de transformation M est de la forme :

$$\begin{bmatrix} a & b & c & t \\ d & e & f & u \\ g & h & i & v \\ 0 & 0 & 0 & 1 \end{bmatrix}$$

où a, e et i sont les termes d'affinité ; b, c, d, f, g et h les termes de rotation ; et t, u et v les termes de translation.

Les termes d'affinité a, e et i permettent de réaliser un agrandissement ou un rétrécissement de l'image Ip, par exemple on augmente la taille globale (homothétie) de 50% ou on la réduit de 20%%, en augmentant de 50%, respectivement en réduisant de 20%, les valeurs de a, e et i. A titre d'exemple une valeur de a, e et i égale à 1 correspond à une dimension prédéterminée de référence de l'image projetée, respectivement selon les directions pjx, pjy et pjz.. Il est également possible d'appliquer les facteurs d'agrandissement ou de rétrécissement selon une seule des dimensions , ou deux des dimensions (non homothétique). Il est également possible d'appliquer des facteurs d'agrandissement ou de rétrécissement différents sur certaines dimensions par rapport à d'autres, en particulier il est possible d'appliquer des facteurs d'agrandissement ou de rétrécissement différents sur chaque dimension. cette manière, en fonction de la position PosO2 de l'oeil de l'observateur O, on peut décider de projeter une image qui apparaisse à l'observateur O plus ou moins grande globalement ou selon certaines des dimensions, selon que les valeurs de a, e et i augmentent ou diminuent respectivement..

On notera que la rotation RotIp dépend de trois angles qui sont les suivants:

- $\beta$ : azimut (qui indique si l'image à projeter se situe à droite ou à gauche de l'observateur, par exemple lorsque ce dernier regarde à droite ou à gauche) ;

- Ω : devers (qui indique l'inclinaison de l'image à projeter Ip, par exemple lorsque l'observateur incline la tête sur le côté. Cela revient à pencher l'image Ip) ;

- ε : site (qui indique l'effet que l'on veut donner au symbole graphique de l'image Ip).

La figure 14 illustre les angles site, et azimut et le plan P1 de l'image à projeter Ip.

On a ainsi PosO2=M*PosO1.

PosO1 est la position d'observation de l'observateur O utilisée pour la projection de l'image Ip dans le référentiel module lumineux RP.

PosO2 est la position d'observation de l'observateur O utilisée pour la projection de l'image Ip dans le référentiel image RI.

Ainsi, la position et la rotation de l'image à projeter Ip sont adaptées en fonction de l'observateur O. De cette manière, l'image à projeter Ip va être compréhensible par l'observateur O. On obtient ainsi une déformation affine de l'image du point de vue que l'on désire, appelée anamorphose.

Ainsi, pour l'oeil d'un conducteur d'une voiture, l'image projetée Ip n'est pas déformée. De la même manière, pour l'oeil d'un conducteur d'un camion, bien qu'il soit positionné bien au dessus du référentiel module lumineux RP, l'image projetée Ip n'est pas non plus déformée. Enfin, pour un observateur extérieur, l'image projetée Ip n'est pas non plus déformée.

On notera que l'image projetée Ip peut ainsi être bien visible de l'observateur puisque sa projection dépend de la position d'observation de l'observateur O et que l'on peut moduler son échelle comme on veut. Ainsi, même s'il est loin du véhicule automobile, l'observateur O pourra toujours comprendre et voir le(s) symbole(s) graphique(s) de l'image projetée Ip.

• 3) Projection de l'image Ip sur la surface de projection

Cette étape comprend les sous-étapes suivantes :

• 3a) Calcul d'une cartographie de luminance CLUM

Dans un mode de réalisation non limitatif, la carte d'intensité lumineuse CLUX est stockée dans une mémoire. Elle aura préalablement était établie lors de la conception du produit, au moyen d'un goniophotomètre (non illustré). Le goniophotomètre est par exemple de type A, c'est-à-dire que le mouvement de rotation autour de l'axe horizontal supporte le mouvement de rotation autour de l'axe vertical ajusté de la rotation autour de l'axe horizontal. La carte d'intensité lumineuse CLUX donne les indicatrices d'intensité pf du module lumineux ML considéré comme une source lumineuse ponctuelle. La direction dir1 d'un rayon lumineux Rx partant du module lumineux ML est exprimée en fonction de deux angles $\theta$ et $\delta$ et est donnée par la formule suivante :

$$direction = \begin{pmatrix} \cos\theta * \cos\delta \\ \sin\theta \\ \cos\theta * \sin\delta \end{pmatrix}$$

Avec $\delta$ la rotation verticale V du goniophotomètre; et $\theta$ la rotation horizontale H du goniophotomètre.

La carte d'intensité lumineuse CLUX comprend ainsi une pluralité d'indicatrices d'intensité pf dont la direction dir1 est donnée par la formule ci-dessus, avec $\theta$ l'angle horizontal de l'indicatrice d'intensité pf, et $\delta$ l'angle vertical de l'indicatrice d'intensité pf. La carte d'intensité lumineuse CLUX est représentée sur la figure 9. On peut y voir une indicatrice d'intensité pf de coordonnées polaires $\delta$=0V, $\theta$=0H. La carte d'intensité lumineuse CLUX permet ainsi de déterminer une intensité I($\theta$,$\delta$) pour une direction donnée.

On a ainsi :
CLUX = {($\delta_i$, $\theta_j$, I$_{i,j}$),(i, j)∈[1,M]x[1,N]}, où M et N sont les nombres de points de discrétisation (ou indicatrices d'intensité) du faisceau lumineux Fx suivant les directions (respectivement) verticale et horizontale.

Une indicatrice d'intensité pf est donc définie par sa direction dir1 et son intensité I($\theta$,$\delta$).

La figure 10 illustre un dispositif d'éclairage DISP comprenant un module lumineux ML avec la direction d'un rayon lumineux Fx.

Le calcul de la cartographie de luminance CLUM sur la surface de projection S comprend les sous-étapes suivantes illustrées sur la figure 11.

- i) un premier calcul de la position POSpf desdites indicatrices d'intensité pf sur la surface de projection S résultant en des points d'impact pi (étape illustrée CALC_POSF(pf, POSpf, pi));
- ii) un deuxième calcul d'une cartographie d'éclairement CECL desdits points d'impact pi (étape illustrée CALC_CECL(pi, CECL)) ;
- iii) un troisième calcul de la cartographie de luminance CLUM desdits points d'impacts pi à partir de la cartographie d'éclairement CECL résultant en lesdits points de luminance pl (étape illustrée CALC_CLUM(pi, CECL)).

Les différentes sous-étapes sont détaillées ci-après.

On notera que les calculs ci-après sont effectués en fonction de la surface de projection S (sol S1 ou mur S2).

∘ sous-étape i)

Le premier calcul est basé sur :

- la position POSpj du module lumineux ML dans le repère cartésien x, y, z ; et
- la direction dir1 desdites indicatrices d'intensité pf décrite précédemment.

Pour le sol S1, on obtient ainsi la position POSpf1 de l'indicatrice d'intensité pf sur le sol dans le repère cartésien x, y, z avec la formule suivante.

POSpf1 = POSpj - (POSpj.z/dir1.z)*dir1.

Avec POSpj.z, la valeur z de la position du module lumineux ML (hauteur du module lumineux au dessus du sol) et dir1.z, la valeur z du vecteur directeur du rayon lumineux Rx.

Pour le mur S2, on obtient ainsi la position POSpf2 de l'indicatrice d'intensité pf sur le mur dans le repère cartésien x, y, z avec la formule suivante.

POSpf2 = POSpj - (D/dir1.x)*dir1.

Avec

- dir1.x, la valeur x du vecteur directeur du rayon lumineux Rx ;
- D, la distance entre le module lumineux ML et le mur. Dans un exemple non limitatif, D est égal à 25mètres.

On obtient ainsi un point d'impact pi (en position POSpf1 ou POSpf2) sur le sol S1 ou sur le mur S2. La figure 12 illustre un exemple non limitatif de point d'impact pi sur une surface de projection S qui est le sol S1.

∘ sous-étape ii)

Une fois le point d'impact pi sur le sol S1 ou sur le mur S2 déterminé, on calcule l'éclairement E de ce point d'impact pi à partir de l'intensité $I(\theta,\delta)$ de l'indicatrice d'intensité pf déterminée précédemment.

Pour le sol S1, on obtient ainsi l'éclairement $E_R$ du point d'impact pi sur le sol avec la formule suivante.

$$E_R = -\ (I(\theta,\delta)\ /dist1^2)*\cos\theta*\sin\delta$$

Avec dist1, la distance entre le point d'impact pi et le module lumineux ML.

Pour le mur S2, on obtient ainsi l'éclairement $E_M$ du point d'impact pi sur le mur avec la formule suivante.

$$E_M = (I(\theta,\delta)\ /dist1^2)*\cos\theta*\cos\delta$$

Avec dist1, la distance entre le point d'impact pi et le module lumineux ML.

La figure 13 illustre l'éclairement E (délimité par un cercle en pointillés) d'un point d'impact pi sur une surface de projection S qui est le sol S1.

∘ sous-étape iii)

Le troisième calcul est basé sur :

- l'éclairement E desdits points d'impacts pi ;
- un vecteur de position Roeil/Moeil entre la position d'un point d'impact pi de la cartographie d'éclairement CECL et la position d'observation PosO1 de l'observateur O (dans le référentiel module lumineux RP) ; et

- une fonction de diffusion de la lumière d.

d est une fonction connue qui permet de calculer la diffusion de la lumière par la surface de projection S. On notera qu'elle varie en fonction de la nature de la surface de projection S. Par exemple, la fonction d est différente si la surface est de l'asphalte, du béton, du goudron, des pavés etc.

Pour le sol S1, on obtient ainsi la luminance $L_R$ du point d'impact pi sur le sol avec la formule suivante.

$$L_R = E_R \frac{d\left(arcos\left(\frac{R_{oeil}}{||R_{oeil}||}.z\right)\right)}{\frac{R_{oeil}}{||R_{oeil}||}.z}$$

Avec $\frac{Roeil}{||Roeil||}.z$ la valeur z du vecteur Roeil normé.

Pour le mur S2, on obtient ainsi la luminance $L_M$ du point d'impact pi sur le mur avec la formule suivante.

$$L_M = E_M \frac{d\left(arcos\left(\frac{M_{oeil}}{||M_{oeil}||}.x\right)\right)}{\frac{M_{oeil}}{||M_{oeil}||}.x}$$

Avec $\frac{Moeil}{||Moeil||}.x$ la valeur x du vecteur Moeil normé.

Dans un mode de réalisation non limitatif, on part de l'hypothèse que la surface de projection S émet de manière uniforme dans toutes les directions. Dans ce cas, le paramètre de diffusion d ne dépend pas des angles $\delta$ et $\theta$.

Dans un mode de réalisation non limitatif, la surface de projection S est considérée un diffuseur lambertien (par exemple un corps gris). On a alors une luminance constante sur la surface de projection S proportionnelle à l'éclairement E et dans ce cas la fonction de diffusion d est un cosinus. Dans ce cas, $L_R = a/\pi\ E_R$ car

$$L_R = E_R \frac{\frac{a}{\pi} . cos\left(acos \frac{\overrightarrow{R_{oeil}} \cdot \vec{z}}{\left\|\overrightarrow{R_{oeil}}\right\|}\right)}{\frac{\overrightarrow{R_{oeil}} \cdot \vec{z}}{\left\|\overrightarrow{R_{oeil}}\right\|}} = \frac{a}{\pi} E_R$$

où a est l'albédo du matériau.

et $L_M = a/\pi \ E_M$

Dans des exemples non limitatifs, l'albédo de l'asphalte est de 7%, et celui du béton varie entre 17% à 27%.

• 3b) Calcul des positions des points de luminance pl dans le référentiel image RI

La position PosL1 d'un point de luminance pl a été déterminée précédemment selon le référentiel module lumineux RP. Elle va être utilisée pour le changement de repère décrit ci-après.

De la même manière que pour le calcul de la position d'observation PosO2 de l'observateur O, cette étape effectue un changement de repère. On passe en effet du référentiel module lumineux RP (défini par les axes pjx, pjy, pjz) au référentiel image RI (défini par les axes Ix, Iy, Iz) de l'image à projeter Ip.

Le calcul de la position PosL2 d'un point de luminance pl dans le référentiel image RI est basé sur ladite au moins une matrice de transformation M du référentiel module lumineux RP vers ledit référentiel image RI (matrice de transformation M décrite précédemment).

Dans un mode de réalisation non limitatif, la position PosL2 est de la même forme que la position PosO2 décrite précédemment :

$$\begin{bmatrix} pjx \\ pjy \\ pjz \\ 1 \end{bmatrix}$$

On notera que la matrice de transformation M a été décrite lors du calcul de la position d'observation PosO2 de l'observateur O dans le référentiel image RI. Elle n'est donc pas détaillée de nouveau ici.

On a ainsi PosL2=M*PosL1.

PosL1 est la position du point de luminance pl dans le référentiel module lumineux RP.

PosL2 est la position du point de luminance pl dans le référentiel image RI.

La figure 15 illustre l'image à projeter Ip ainsi que le référentiel image RI. On peut également voir le point de luminance pl et l'oeil de l'observateur O (qui correspond à la position d'observation) avec leur position respective PosL2 et PosO2 définies dans le référentiel image RI.

On notera que bien que l'image projetée Ip sur le sol ou le mur est en 2D, (deux dimensions), on peut obtenir un effet 3D (trois dimensions), c'est-à-dire un effet de perspective ou de trompe l'oeil, en réglant l'angle site ε vu précédemment. L'observateur O (que ce soit le conducteur, un passager, ou un observateur extérieur) va voir l'image en perspective. A cet effet, l'angle site ε est supérieur à -90°.

En particulier, il est supérieur à -90° et inférieur ou égal à 0°. L'effet 3D est ainsi visible entre 0 et jusqu'à -90° (non inclus).

On notera qu'à -90° l'image IP est plaquée au sol et est donc sans effet 3D.

Les figures 16 à 18 illustrent une image projetée Ip qui est une pyramide. Un observateur O qui est extérieur au véhicule automobile, tel qu'un piéton, est pris comme exemple non limitatif. La pyramide est visible selon trois points de vue particuliers, le point de vue du conducteur (figure 16), le point de vue d'un passager arrière (figure 17) et le point de vue du piéton (figure 18), mais n'est vue en en effet 3D que d'un seul point de vue. Dans l'exemple non limitatif illustré, seul le piéton va voir la pyramide en 3D (comme illustrée sur la figure 18). Du point de vue du conducteur ou du passager, la pyramide apparaît déformée.

Dans une variante de réalisation non limitative, l'angle site $\varepsilon$ est égal à 0. L'observateur O regarde droit devant lui. Dans ce cas, l'observateur O va voir l'image, à savoir ici la pyramide, comme si elle était debout.

Dans une variante de réalisation non limitative, l'angle site $\varepsilon$ est sensiblement égal à -35°. Cela permet d'avoir un effet 3D relevé dans le sens de la route.

Le plan P1 de l'image Ip est ainsi perpendiculaire à la direction d'observation de l'observateur O.

Si l'angle site $\varepsilon$ est différent de -90°, la pyramide sera ainsi visible en 3D mais plus ou moins inclinée.

• 3c) définir les coordonnées ply, plz de la projection plr d'un point de luminance pl

Tel qu'illustré sur la figure 19, dans un mode de réalisation non limitatif, la définition des coordonnées ply, plz d'une projection plr d'un point de luminance pl comprend les sous-étapes de :

- i) calculer le point d'intersection Int entre (sous-étape illustrée CALC_INT(PosO2, PosL2, P1)) :

  - la droite V(PosO2, PosL2) passant par la position d'observation PosO2 dans ledit référentiel image RI de l'observateur O et par la position PosL2 dans ledit référentiel image RI dudit point de luminance pl ; et
  - le plan image P1 de l'image à projeter Ip.

- ii) déterminer les coordonnées ply, plz dudit point d'intersection Int à partir des dimensions L1, H1 de ladite image à projeter Ip (sous-étape illustrée DEF_COORD(Int, L1, H1).

Ces deux sous-étapes sont décrites ci-après.

○ sous-étape i)

Dans le référentiel image RI, le point d'intersection Int entre la droite (oeil, point de luminance) et le plan image P1 est le point de la droite (oeil, point de luminance) pour lequel Ix = 0. On a ainsi :

$$Int = PosO2-((PosO2.x)/(V(PosO2, PosL2).x))*V(PosO2, PosL2)$$

Avec

- V(PosO2, posL2) le vecteur représentant la droite (oeil, point de luminance) dans le référentiel image RI ;
- V(PosO2, posL2).x la valeur x du vecteur ;
- Int le point d'intersection entre la droite (oeil, pl) et l'image à projeter Ip dans le référentiel image RI. Le point d'intersection Int est ainsi la projection plr du point de luminance pl sur le plan image P1 de l'image à projeter Ip ;
- PosL2.x la valeur x de la position du point de luminance pl ;
- PosO2.x la valeur x de la position d'observation de l'observateur.

On notera que l'on prend comme hypothèse que la position d'observation de l'observateur O est placé sur l'axe Ix.

La figure 20 illustre l'image à projeter Ip, le point d'intersection Int qui correspond à la projection plr du point de luminance pl sur ledit plan P1 et le vecteur V(posO2, posL2) (illustré en pointillés). On notera que la projection plr est de type centrale, de façon à produire un effet de perspective conique. Par la suite on utilisera indifféremment le terme projection plr ou projection centrale plr.

○ sous-étape ii)

Les coordonnées ply, plz de la projection centrale plr du point de luminance pl dans le référentiel image RI correspondent aux coordonnées selon l'axe ly (vertical) et selon l'axe Iz (horizontal) de la position du point d'intersection Int déterminé précédemment. Dans un mode de réalisation non limitatif, elles sont exprimées en mètre.

On en déduit les coordonnées de ce point dans le repère de la figure 20 par les formules suivantes :

$$ply = (Int.y+(L1/2))/L1$$

$$plz = Int.z/H1$$

Avec,

- L1 la largeur de l'image à projeter Ip (exprimée en mètre dans un exemple non limitatif) ;
- H1 la hauteur de l'image à projeter Ip (exprimée en mètre dans un exemple non limitatif) ;
- Int.y la valeur y du point d'intersection ;
- Int.z la valeur z du point d'intersection.

La figure 20 illustre la définition des coordonnées ply et plz en mètres dans le référentiel image RI.

On notera que L1 et H1 sont des paramètres d'entrée du procédé de projection MTH.

Cette sous-étape permet de déterminer par la suite si les coordonnées ply, plz appartiennent à l'image à projeter Ip (elles doivent alors être comprises entre 0 et 1) et donc si la projection centrale plr du point de luminance pl appartient à l'image à projeter Ip.

A cet effet, dans un mode de réalisation non limitatif, on normalise l'image à projeter Ip et les coordonnées de la projection plr ainsi calculées. Cela permet de simplifier le test d'appartenance à l'image à projeter Ip.

On obtient ainsi un repère normé IX (axe vertical), IY (axe horizontal) tel qu'illustré sur la figure 21. La valeur des coordonnées ply, plz de la projection plr est maintenant comprise entre 0 et1. Dans l'exemple illustré, les axes ly et lz qui sont devenus respectivement les axes IX et -IY. On obtient ainsi des dimensions d'image H2, L2 comprises entre 0 et 1.

La figure 21 illustre la définition des coordonnées ply et plz en valeurs sans unité dans le référentiel image RI.

On notera que la taille (L1, H1) de l'image à projeter Ip peut être définie dans cette étape 3c) ou dans l'étape avec la matrice de transformation M.

Etant donné que les dimensions L1 et H1 et donc L2, H2, la position et la rotation de l'image à projeter Ip sont connues (ce sont des paramètres d'entrée du procédé de projection MTH), on peut facilement déterminer, via ses coordonnées ply, plz, si la projection pl appartient ou non à l'image à projeter Ip.

• 3d) Définir les coordonnées du pixel Pix correspondant

La définition des coordonnées ligne (lig), colonne (col) du pixel Pix est effectué pour chaque projection plr (de point de luminance pl) qui appartient à l'image à projeter Ip, à savoir qui est située à l'intérieur du rectangle L2*H2 de l'image à projeter Ip, ce qui a été vérifié à l'étape 3c-ii).

Ainsi, si la projection plr appartient à l'image à projeter Ip, les coordonnées du pixel Pix correspondant sont calculées. Elles sont calculées comme suit.

$$Lig = - plz*L2$$

$$Col = ply*H2$$

Avec,

- lig, la ligne du pixel ;
- col, la colonne du pixel ;
- L2 la largeur de l'image à projeter Ip (cette fois-ci exprimée en pixels) ;
- H2 la hauteur de l'image à projeter Ip (cette fois-ci exprimée en pixels) ;
- ply la coordonnée de la projection plr selon l'axe IX ;
- plz la coordonnée de la projection plr selon l'axe IY.

• 3e) Correction de la valeur d'intensité de l'indicatrice d'intensité pf correspondant

Avec les coordonnées lig, col du pixel Pix, on peut récupérer la valeur de sa couleur Co dans l'image que l'on veut projeter.

Dans un exemple non limitatif, la valeur est comprise entre 0 et 255. On peut ainsi aller du blanc au noir en passant par plusieurs nuances de gris comme illustré sur la figure 22. Par le terme blanc il faut comprendre une couleur quelconque unique et par l'expression de nuances de gris il faut comprendre les nuances obtenues de ladite couleur unique entre sa nuance la plus claire et le noir. Ainsi l'image projetée n'est pas forcément composée de la couleur blanche et des nuances de gris associées aux valeurs de Co comprise entre 0 et 255, mais des nuances plus ou moins sombres d'une couleur quelconque visible par l'oeil humain. Avantageusement il s'agit de blanc, de jaune, de bleu, de rouge ou d'ambre.

On corrige alors la valeur d'intensité Vi de l'indicatrice d'intensité pf correspondant.

On notera que cela est possible car le module lumineux ML est digitalisé.

Dans un premier mode de réalisation non limitatif, la correction s'effectue comme suit :

$$Vi = \sigma.Vi0*Co/255.$$

Avec :

- Vi0 la valeur d'intensité initiale de l'indicatrice d'intensité pf du module lumineux,
- Co la couleur du pixel Pix correspondant ; et
- $\sigma$ un facteur de surintensification maximale.

Dans un deuxième mode de réalisation non limitatif, la correction s'effectue comme suit :
Vi=$\varphi$.Co, avec $\varphi$ un coefficient de luminance. On effectue ainsi une substitution des luminances. Cela permet d'afficher l'image sur un fond indépendant de la distribution de lumière de base.

Cette étape est effectuée pour tous les points de luminance pl dont la projection centrale plr appartient au rectangle L2*H2 de l'image à projeter Ip.

Ainsi, le module lumineux ML peut projeter sur la surface de projection S le faisceau lumineux Fx comprenant les rayons lumineux Rx avec les valeurs d'intensité Vi corrigées des indicatrices d'intensité (étape 3f) illustrée sur la figure 7 PROJ(ML, Fx, pf, Vi). Cela permet d'afficher la bonne couleur Co pour l'indicatrice d'intensité considérée. De cette manière, l'image à projeter Ip est intégrée dans le faisceau lumineux Fx du module lumineux ML (puisqu'elle est produite par ledit module lumineux ML lui-même) et est projetée sur la surface de projection S avec les bonnes couleurs.

Ainsi, en fonction de la couleur Co désirée d'un pixel Pix, on applique un facteur de correction déterminé à la valeur d'intensité Vi de l'indicatrice d'intensité pf correspondant. Ainsi, on peut obtenir des indicatrices d'intensité dont la couleur ne dépend pas de l'intensité lumineuse du faisceau lumineux Fx lui-même. Par exemple, la pyramide projetée illustrée est de couleur homogène.

Dans le cas d'une source lumineuse indépendante du module lumineux ML qui projetterait ladite pyramide en surimposition sur ledit faisceau lumineux, cela ne serait pas le cas. Les pixels de l'image seraient plus ou moins éclairés en fonction de la répartition de l'intensité lumineuse dudit faisceau lumineux. Leur couleur varierait ainsi en fonction de l'intensité lumineuse dudit faisceau lumineux.

Par ailleurs, le fait que l'image à projeter Ip soit intégrée dans ledit faisceau lumineux Fx et non pas en surimposition permet d'obtenir un meilleur contraste de l'image sur la surface de projection S que dans le cas d'une utilisation d'une source lumineuse indépendante. Dans le cas d'une source lumineuse indépendante, le faisceau lumineux éclaire également l'image projetée. Cette dernière est par conséquent plus claire au niveau des couleurs.

Il est à noter que la valeur de couleur Co d'un pixel, ou d'une série de pixels correspondant à des parties prédéterminées de l'image projetée, peut aussi être utilisée pour renforcer l'effet 3D. Par exemple, en référence à la figure 12, les pixels correspondant à la face F1 du motif de l'image projetée et ceux correspondant à la face F2 du motif de l'image projetée, peuvent comporter des valeurs de couleur Co spécifiques et différentes. Ainsi la face F1 parait plus lumineuse que la face F2 ou inversement selon que la valeur de la couleur Co correspondant aux pixels composant la face F1 est supérieur ou inférieure à celle correspondant aux pixels composant la face F2. La valeur de la couleur Co correspondant aux pixels composant la face F1 et/ou F2 peut également varier de sorte à faire un effet de dégradé, par exemple d'un bord à l'autre de la face F1 et/ou F2, permettant de renforcer encore plus l'effet 3D.

Il est possible d'obtenir des images multicolores en utilisant plusieurs systèmes fonctionnant selon le procédé décrit ci-dessus et émettant chacun une couleur visuellement différente. Les images projetées par chaque système sont alors calculées pour se projeter sur la surface de projection S de manière superposée afin obtenir une image projetée globale multicolore.

On notera que comme la projection de l'image à projeter Ip dépend de la position d'observation de l'observateur O, elle est donc continuellement mise à jour en fonction du déplacement de l'observateur O par rapport au véhicule automobile lorsque ce dernier est à l'extérieur du véhicule automobile et en fonction du déplacement du véhicule automobile lui-même lorsque l'observateur O est à l'intérieur du véhicule automobile.. Dans un mode de réalisation non limitatif, la fréquence de rafraichissement des calculs présentés ci-dessus est ainsi fonction de la vitesse de déplacement de l'observateur par rapport au véhicule automobile pour le cas d'un observateur extérieur. Plus la vitesse augmente, plus la fréquence de rafraichissement augmente. Plus la vitesse diminue, plus la fréquence de rafraichissement diminue.

Dans un autre mode de réalisation non limitatif, la fréquence de rafraichissement des calculs présentés ci-dessus est constante. Dans un exemple non limitatif, la fréquence est d'une seconde.

Ainsi, ces calculs étant effectués en temps réel, il n'est pas nécessaire d'avoir une base de données avec des images d'un même symbole graphique pré-chargées en mémoire correspondant à plusieurs positions d'observation imaginables de l'observateur par rapport au véhicule automobile (lorsqu'il est à l'extérieur), ou dans le véhicule automobile (lorsqu'il est à l'intérieur).

Le procédé de projection MTH permet ainsi de projeter une ou plusieurs images Ip sur une surface de projection S qui est non seulement visible par un observateur situé à l'intérieur ou à l'extérieur du véhicule automobile mais également compréhensible par lui puisque l'image projetée Ip est orientée dans la direction du regard dudit observateur O.

On notera que dans le cas le cas où on projette plusieurs images Ip en même temps, on calcule la combinaison des différentes images avec le faisceau lumineux Fx avant de projeter le résultat global.

Dans un mode de réalisation non limitatif, le procédé de projection MTH est mis en oeuvre par un dispositif d'éclairage DISP pour véhicule automobile V.

Dans un mode de réalisation non limitatif, le dispositif d'éclairage DISP permet la réalisation d'une fonction photométrique réglementaire telle qu'un feu de croisement, feu de route ou une fonction de signalisation avant, arrière et/ou latérale. Ainsi, le dispositif d'éclairage se situe à l'avant du véhicule automobile ou à l'arrière.

Le dispositif d'éclairage DISP est illustré à la figure 17. Il comprend une unité de traitement PR et au moins un module lumineux ML. Dans des modes de réalisation non limitatifs, le dispositif d'éclairage est un projecteur ou un feu arrière.

L'unité de traitement PR est adaptée pour :

- détecter une position d'observation PosO1 d'un observateur O dans un référentiel module lumineux RP (fonction illustrée DET_POS(O, PosO1, RP)) ;
- calculer la position d'observation PosO2 de l'oeil de l'observateur O dans un référentiel image RI (fonction illustrée DET_POS(O, PosO2, RI)) ;

Ledit dispositif d'éclairage DISP est adapté pour projeter ladite image Ip sur ladite surface de projection S en fonction de ladite position d'observation PosO2 de l'observateur O dans le référentiel image RI, ladite image Ip étant intégrée dans ledit faisceau lumineux Fx du module lumineux ML (fonction illustrée PROJ(Fx, Ip, S).

Pour la projection de ladite image Ip sur ladite surface de projection S, l'unité de traitement PR est en outre adaptée pour :

- à partir d'une carte d'intensité lumineuse CLUX du module lumineux ML comprenant une pluralité d'indicatrices d'intensité pf, calculer une cartographie de luminance CLUM sur la surface de projection S résultant en des points de luminance pl (fonction illustrée CALC_CLUM(CLUX, S, pl));
- calculer la position PosL2 de chaque point de luminance pl dans le référentiel image RI (fonction illustré CALC_POS(pl, PosL2, O, RI));
- à partir de sa position PosL2 et de la position d'observation PosO2 de l'observateur O dans ledit référentiel image RI, définir les coordonnées ply, plz de la projection plr de chaque point de luminance pl sur le plan image P1 de ladite image à projeter Ip (fonction illustrée DEF_PLR(plr, P1, PosL2, PosO2)) ;
- si ladite projection plr appartient à ladite image à projeter Ip, définir des coordonnées lig, col du pixel Pix correspondant (fonction illustrée DEF_PIX(pl(lig, col), ply, plz));
- pour chaque projection plr d'un point de luminance pl appartenant à ladite image à projeter Ip, corriger la valeur d'intensité Vi de l'indicatrice d'intensité correspondant pf en fonction de la couleur Co du pixel correspondant Pix (fonction illustrée MOD_PF(pf, Vi, Pix, Co));

Pour la projection de ladite image Ip sur la surface de projection S, le module lumineux ML est adapté pour projeter sur la surface de projection S le faisceau lumineux Fx avec les valeurs d'intensité VI corrigées des indicatrices d'intensité pf (fonction illustrée PROJ(ML, Fx, Vi, pf)).

On notera que l'unité de traitement PR est intégrée dans le module lumineux ML ou est indépendante dudit module lumineux ML.

Bien entendu la description - de la demande de brevet PCT/EP2016/071596 déposée le 13 septembre 2016 n'est pas limitée aux modes de réalisation décrits ci-dessus.

Ainsi, dans un autre mode de réalisation non limitatif, un goniophtomètre de type B peut être également utilisé, c'est-à-dire que le mouvement de rotation autour de l'axe vertical supporte le mouvement de rotation autour de l'axe horizontal.. Ainsi, dans un autre mode de réalisation non limitatif, l'unité de traitement PR être déportée par rapport au dispositif d'éclairage DISP.

Ainsi, l'étape de calcul de la position d'observation PosO2 dans le référentiel image RI peut être effectuée avant ou en même temps que le calcul de la position de luminance PosL2.

Ainsi, le véhicule automobile V comprend un ou plusieurs dispositifs d'éclairage DISP adaptés pour mettre en oeuvre le procédé de projection MTH décrit.

Ainsi, la demande de brevet PCT/EP2016/071596présente notamment les avantages suivants :

- elle permet de projeter une image comprenant au moins un symbole graphique qui permet d'améliorer le confort et/ou la sécurité d'un observateur qui est à l'intérieur ou à l'extérieur du véhicule automobile ;
- elle permet de projeter une image qui est visible et compréhensible par un observateur déterminé car ladite projection dépend de la position dudit observateur; On applique ainsi le même procédé de projection pour projeter une image compréhensible par le conducteur ou pour projeter une image compréhensible par le piéton ou encore par un conducteur d'un véhicule suiveur par exemple ; elle permet de déformer l'image à projeter Ip pour qu'elle soit compréhensible par un observateur déterminé. On crée ainsi une anamorphose d'une image, ladite anamorphose étant dépendante de la position d'observation de l'observateur O ;
- la position d'observation de l'observateur dans le référentiel image est fonction de la position et de la rotation de ladite image à projeter. Grâce à la rotation qui dépend notamment d'un angle site, lorsque ce dernier est réglé de façon particulière, l'observateur a l'impression de voir une image en 3D ;
- elle permet d'intégrer l'information à projeter au faisceau d'éclairage Fx du module lumineux ML du véhicule automobile. Il n'est pas nécessaire d'avoir une source lumineuse supplémentaire dédiée ;
- ainsi, contrairement à un état de la technique antérieur qui affiche une image directement sur la vitre du feu arrière du véhicule automobile et qui peut apparaître trop petite à une certaine distance, l'invention permet à un observateur extérieur qui se trouve à une certaine distance dudit véhicule automobile de bien voir l'image puisque cette dernière est projetée en fonction de la position même de l'observateur et sur une surface de projection qui n'est pas la vitre d'un feu du véhicule automobile. Les dimensions de l'image à projeter Ip ne sont plus limitées à la petite surface de projection telle que la vitre du feu ;
- elle permet de proposer une solution qui peut être utilisée pour un destinataire de l'information qui ne peut voir que l'avant ou les côtés du véhicule automobile par exemple, contrairement à une solution qui affiche une image sur les feux arrières du véhicule automobile ;
- elle permet de proposer une autre solution qu'un affichage d'image(s) sur les feux arrières du véhicule automobile ;
- elle permet de proposer une autre solution qu'une projection d'image(s) uniquement dédiée(s) au conducteur du véhicule automobile.

## Revendications

1. Procédé de projection d'au moins une image par un système de projection (2) d'un véhicule automobile comportant un dispositif de détection (4) propre à détecter une zone de perturbation (38) et à générer un signal d'alerte, une unité de traitement (10) propre à générer un signal de commande ; un dispositif imageur (18) propre à recevoir le signal de commande et projeter une image numérique, une unité de stockage (6) stockant au moins une image représentative d'un pictogramme, tel que le procédé comporte les étapes suivantes :

   a) détection (30) d'une zone de perturbation (38),
   b) émission (42) d'un signal d'alerte, et

   sur réception du signal d'alerte :

   c) génération d'un signal de commande, le procédé étant **caractérisé en ce que** ladite étape de génération comporte les sous-étapes suivantes :

      • détermination (44) de la position du conducteur dans un référentiel prédéfini dit référentiel de projection (Rp),
      • calcul (46) d'une matrice de transformation (M) d'une image en fonction de la position du conducteur déterminée,
      • génération (54) du signal de commande, le signal de commande étant obtenu par application de ladite matrice de transformation (M) à au moins une image stockée,

   d) commande (56) du dispositif imageur (18) à partir du signal de commande pour projeter une image transformée, le pictogramme apparaissant dans un plan vertical (PV) pour ledit conducteur dans l'image transformée, et

e) projection (58) de l'image transformée.

**2.** Procédé de projection selon la revendication 1, dans lequel la matrice de transformation (M) est conformée pour faire pivoter l'image stockée d'un angle de 90° par rapport à un axe horizontal A s'étendant sur la chaussée, ledit axe horizontale (A) étant perpendiculairement à la direction de déplacement du véhicule.

**3.** Procédé de projection selon l'une quelconque des revendications 1 et 2, dans lequel l'étape de génération d'un signal de commande comporte en outre une étape d'ajout (52) d'au moins une zone d'ombre sur ladite image transformée de sorte que le pictogramme représenté sur l'image transformée soit perçu en relief par ledit conducteur.

**4.** Procédé de projection selon l'une quelconque des revendications 1 à 3, dans lequel le dispositif de détection (4) comporte un récepteur (3) propre à recevoir un signal électromagnétique, et un système (5) de localisation géographique du véhicule automobile, et dans lequel l'étape de la détection (30) de la zone de perturbation (38) comprend les étapes suivantes :

- détermination (32) de la position géographique du véhicule automobile ;
- réception (34) d'un signal électromagnétique propre à indiquer au moins une zone de perturbation (38) sur la chaussée ;
- détermination (36) de la possibilité de passage du véhicule automobile dans la zone de perturbation ;
- élaboration (40) d'un signal d'alerte lorsque le véhicule automobile va traverser la zone de perturbation (38).

**5.** Procédé de projection selon la revendication 4, dans lequel le signal électromagnétique est un signal radioélectrique parmi un signal radiophonique, un signal d'un réseau de télécommunication sans fil et un signal d'un réseau informatique régie par le protocole de communication défini par les normes du groupe IEEE 802.11.

**6.** Procédé de projection selon la revendication 4, dans lequel le signal électromagnétique est un signal lumineux par exemple un signal ayant une longueur d'onde comprise entre 400 et 800 nanomètres.

**7.** Procédé de projection selon l'une quelconque des revendications 1 à 3, dans lequel le système de projection (2) comporte une caméra, et dans lequel l'étape de détection (30) comprend les étapes suivantes :

- acquisition (60)d'au moins une image représentative de la chaussée par la dite caméra, et
- traitement (62) de ladite au moins une image acquise pour détecter l'existence d'une zone de perturbation
- élaboration (64) d'un signal d'alerte.

**8.** Procédé de projection selon l'une quelconque des revendications 1 à 7, dans lequel le pictogramme est une image représentative d'un élément parmi un plot routier, un panneau de signalisation routière, des lignes ou des flèches de guidage et des piquets de chantier.

**9.** Procédé de projection selon l'une quelconque des revendications 1 à 8, qui comporte en outre une étape de capture d'une image du conducteur automobile et dans lequel l'étape de détermination de la position du conducteur dans un référentiel prédéfini dit référentiel de projection (Rp) est mise en oeuvre à partir de l'image capturée.

**10.** Système de projection (2) d'au moins une image d'un véhicule automobile, ledit système de projection (2) comportant :

- une unité de stockage (6) apte à stocker au moins une image représentant un pictogramme ;
- un dispositif de détection (4) propre à détecter une zone de perturbation (38), ledit dispositif de détection (4) étant adaptée à générer un signal d'alerte sur détection de la zone de perturbation (38) le système étant **caractérisé en ce qu'**il comporte
- une unité de traitement (10) connectée à l'imageur (8) et au dispositif de détection (4), l'unité de traitement (10) étant propre à calculer une matrice de transformation (M) en fonction de la position du conducteur et à générer un signal de commande à partir de la matrice de transformation (M) et de l'image stockée, et
- un dispositif imageur (18) propre à projeter au moins une image transformée à partir de signal de commande réceptionné, l'image transformée étant destinée à apparaître dans un plan vertical pour ledit conducteur du véhicule automobile.

**11.** Système de projection (2) selon la revendication 10 comportant une source lumineuse (16) apte à émettre un faisceau lumineux en direction du dispositif imageur (18), et un dispositif de projection (10) apte à projeter sur la chaussée l'image transformée.

12. Système de projection (2) selon l'une quelconque des revendications 10 et 11, comportant un imageur apte à capturer le conducteur automobile et dans lequel l'unité de traitement (10) est apte à rechercher la position du conducteur sur l'image capturée et à définir la matrice de transformation (M) à partir de la position du conducteur déterminée.

**Patentansprüche**

1. Verfahren zur Projektion mindestens eines Bildes durch ein Projektionssystem (2) eines Kraftfahrzeugs, umfassend eine Detektionsvorrichtung (4), die geeignet ist, einen Störbereich (38) zu detektieren und ein Warnsignal zu erzeugen, eine Verarbeitungseinheit (10), die geeignet ist, ein Steuersignal zu erzeugen, eine Bildgebungsvorrichtung (18), die geeignet ist, das Steuersignal zu empfangen und ein digitales Bild zu projizieren, eine Speichereinheit (6), die mindestens ein für ein Piktogramm repräsentatives Bild speichert, wobei das Verfahren die folgenden Schritte umfasst:

   a) Detektion (30) eines Störbereichs (38),
   b) Senden (42) eines Warnsignals und beim Empfangen des Warnsignals:
   c) Erzeugen eines Steuersignals, wobei das Verfahren **dadurch gekennzeichnet ist, dass** der Erzeugungsschritt die folgenden Teilschritte umfasst:

   • Bestimmen (44) der Position des Fahrers in einem vorgegebenen Bezugssystem, Projektionsbezugssystem (Rp) genannt,
   • Berechnen (46) einer Transformationsmatrix (M) eines Bildes in Abhängigkeit von der bestimmten Position des Fahrers,
   • Erzeugen (54) des Steuersignals, wobei das Steuersignal durch Anwenden der Transformationsmatrix (M) auf mindestens ein gespeichertes Bild erhalten wird,

   d) Steuern (56) der Bildgebungsvorrichtung (18) ausgehend von dem Steuersignal, um ein transformiertes Bild zu projizieren, wobei das Piktogramm für den Fahrer in einer vertikalen Ebene (PV) in dem transformierten Bild erscheint, und
   e) Projektion (58) des transformierten Bildes.

2. Projektionsverfahren nach Anspruch 1, bei dem die Transformationsmatrix (M) dazu ausgebildet ist, das gespeicherte Bild um einen Winkel von 90° in Bezug auf eine horizontale Achse (A), die sich auf der Fahrbahn erstreckt, drehen zu lassen, wobei die horizontale Achse (A) senkrecht zur Bewegungsrichtung des Fahrzeugs verläuft.

3. Projektionsverfahren nach einem der Ansprüche 1 und 2, bei dem der Schritt des Erzeugens eines Steuersignals ferner einen Schritt des Hinzufügens (52) mindestens eines Schattenbereichs auf dem transformierten Bild umfasst, so dass das auf dem transformierten Bild dargestellte Piktogramm vom Fahrer erhaben wahrgenommen wird.

4. Projektionsverfahren nach einem der Ansprüche 1 bis 3, bei dem die Detektionsvorrichtung (4) einen Empfänger (3), der geeignet ist, ein elektromagnetisches Signal zu empfangen, und ein System (5) zur geografischen Positionsbestimmung des Kraftfahrzeugs umfasst und bei dem der Schritt der Detektion (30) des Störbereichs (38) die folgenden Schritte umfasst:

   - Bestimmen (32) der geografischen Position des Kraftfahrzeugs;
   - Empfangen (34) eines elektromagnetischen Signals, das geeignet ist, mindestens einen Störbereich (38) auf der Fahrbahn anzugeben;
   - Bestimmen (36) der Möglichkeit des Einfahrens des Kraftfahrzeugs in den Störbereich;
   - Erarbeiten (40) eines Warnsignals, wenn das Kraftfahrzeug den Störbereich (38) durchqueren wird.

5. Projektionsverfahren nach Anspruch 4, bei dem das elektromagnetische Signal ein funkelektrisches Signal unter einem Rundfunksignal, einem Signal eines drahtlosen Telekommunikationsnetzes und einem Signal eines Datenverarbeitungsnetzes ist, welches durch das durch die Normen der Gruppe IEEE 802.11 definierte Kommunikationsprotokoll geregelt wird.

**6.** Projektionsverfahren nach Anspruch 4, bei dem das elektromagnetische Signal ein Lichtsignal ist, beispielsweise ein Signal mit einer Wellenlänge zwischen 400 und 800 Nanometern.

**7.** Projektionsverfahren nach einem der Ansprüche 1 bis 3, bei dem das Projektionssystem (2) eine Kamera umfasst und bei dem der Detektionsschritt (30) die folgenden Schritte umfasst:

- Erfassen (60) mindestens eines für die Fahrbahn repräsentativen Bildes durch die Kamera und
- Verarbeiten (62) des mindestens einen erfassten Bildes, um das Vorhandensein eines Störbereichs zu detektieren;
- Erarbeiten (64) eines Warnsignals.

**8.** Projektionsverfahren nach einem der Ansprüche 1 bis 7, bei dem das Piktogramm ein Bild ist, das für ein Element unter einem Poller, einem Verkehrsschild, Linien oder Richtungspfeilen und Lattenpfählen repräsentativ ist.

**9.** Projektionsverfahren nach einem der Ansprüche 1 bis 8, das ferner einen Schritt des Aufnehmens eines Bildes des Fahrzeugfahrers umfasst und bei dem der Schritt des Bestimmens der Position des Fahrers in einem vorgegebenen Bezugssystem, Projektionsbezugssystem (Rp) genannt, ausgehend von dem aufgenommenen Bild ausgeführt wird.

**10.** System zur Projektion (2) mindestens eines Bildes eines Kraftfahrzeugs, wobei das Projektionssystem (2) umfasst:

- eine Speichereinheit (6), die in der Lage ist, mindestens ein Piktogramm, das ein Bild darstellt, zu speichern;
- eine Detektionsvorrichtung (4), die geeignet ist, einen Störbereich (38) zu detektieren, wobei die Detektionsvorrichtung (4) dazu eingerichtet ist, beim Detektieren des Störbereichs (38) ein Warnsignal zu erzeugen, wobei das System **dadurch gekennzeichnet ist, dass** es umfasst:
- eine Verarbeitungseinheit (10), die mit dem Bildgeber (8) und mit der Detektionsvorrichtung (4) verbunden ist, wobei die Verarbeitungseinheit (10) geeignet ist, eine Transformationsmatrix (M) in Abhängigkeit von der Position des Fahrers zu berechnen und ein Steuersignal ausgehend von der Transformationsmatrix (M) und dem gespeicherten Bild zu erzeugen, und
- eine Bildgebungsvorrichtung (18), die geeignet ist, mindestens ein Bild zu projizieren, das ausgehend von dem empfangenen Steuersignal transformiert wurde, wobei das transformierte Bild dazu bestimmt ist, für den Fahrer des Kraftfahrzeugs in einer vertikalen Ebene zu erscheinen.

**11.** Projektionssystem (2) nach Anspruch 10, umfassend eine Lichtquelle (16), die in der Lage ist, einen Lichtstrahl in Richtung der Bildgebungsvorrichtung (18) auszusenden, und eine Projektionsvorrichtung (10), die in der Lage ist, das transformierte Bild auf die Fahrbahn zu projizieren.

**12.** Projektionssystem (2) nach einem der Ansprüche 10 und 11, das einen Bildgeber umfasst, der in der Lage ist, den Fahrzeugfahrer aufzunehmen, und bei dem die Verarbeitungseinheit (10) in der Lage ist, die Position des Fahrers auf dem aufgenommenen Bild zu suchen und die Transformationsmatrix (M) ausgehend von der bestimmten Position des Fahrers zu definieren.


**Claims**

**1.** Method for projecting at least one image, by a projection system (2) of a motor vehicle comprising a detection device (4) capable of detecting a disruption area (38) and generating a warning signal, a processing unit (10) capable of generating a control signal, an imaging device (18) capable of receiving the control signal and projecting a digital image, and a storage unit (6) storing at least one image representative of a pictogram, such that the method comprises the following steps:

a) detecting (30) a disruption area (38),
b) transmitting (42) a warning signal, and upon receiving the warning signal:
c) generating a control signal, the method being **characterized in that** said generation step comprises the following sub-steps:

• determining (44) the position of the driver in a predefined reference frame referred to as the projection reference frame (Rp),
• calculating (46) a transformation matrix (M) for transforming an image depending on the determined position of the driver,
- generating (54) the control signal, the control signal being obtained by applying said transformation matrix (M) to at least one stored image,

d) controlling (56) the imaging device (18) from the control signal so as to project a transformed image, the pictogram appearing in a vertical plane (PV) to said driver in the transformed image, and
e) projecting (58) the transformed image.

2. Projection method according to Claim 1, in which the transformation matrix (M) is designed to pivot the stored image by an angle of 90° relative to a horizontal axis A extending over the roadway, said horizontal axis (A) being perpendicular to the direction of movement of the vehicle.

3. Projection method according to either one of Claims 1 and 2, in which the step of generating a control signal further comprises a step (52) of adding at least one area of shadow to said transformed image such that the pictogram shown in the transformed image is perceived in 3D by said driver.

4. Projection method according to any one of Claims 1 to 3, in which the detection device (4) comprises a receiver (3) capable of receiving an electromagnetic signal, and a geographical location system (5) of the vehicle, and the step (30) of detecting the disruption area (38) comprises the following steps:

- determining (32) the geographical position of the motor vehicle;
- receiving (34) an electromagnetic signal capable of indicating at least one disruption area (38) on the roadway;
- determining (36) the possibility of the motor vehicle travelling through the disruption area;
- producing (40) a warning signal when the motor vehicle is going to travel through the disruption area (38).

5. Projection method according to Claim 4, in which the electromagnetic signal is a radio-frequency signal chosen from a program signal, a wireless telecommunication network signal and a computer network signal governed by the communication protocol defined by IEEE 802.11 group standards.

6. Projection method according to Claim 4, in which the electromagnetic signal is a light signal, for example a signal that has a wavelength of between 400 and 800 nanometers.

7. Projection method according to any one of Claims 1 to 3, in which the projection system (2) comprises a camera, and in which the detection step (30) comprises the following steps:

- acquiring (60) at least one image representative of the roadway, by said camera, and
- processing (62) said at least one acquired image in order to detect the existence of a disruption area
- producing (64) a warning signal.

8. Projection method according to any one of Claims 1 to 7, in which the pictogram is an image representative of an element chosen from a traffic cone, a road sign, lines or guide arrows and temporary work signs.

9. Projection method according to any one of Claims 1 to 8, that further comprises a step of capturing an image of the driver of the motor vehicle, and in which the step of determining the position of the driver in a predefined reference frame referred to as the projection reference frame (Rp) is implemented from the captured image.

10. System (2) for projecting at least one image, for a motor vehicle, said projection system (2) comprising:

- a storage unit (6) suitable for storing at least one image representing a pictogram;
- a detection device (4) capable of detecting a disruption area (38), said detection device (4) being designed to generate a warning signal upon detection of the disruption area (38), the system being **characterized in that** it comprises
- a processing unit (10) connected to the imager (8) and to the detection device (4), the processing unit (10) being capable of calculating a transformation matrix (M) depending on the position of the driver and of generating a control signal from the transformation matrix (M) and the stored image, and
- an imaging device (18) capable of projecting at least one transformed image from the received control signal, the transformed image being intended to appear in a vertical plane to said driver of the motor vehicle.

11. Projection system (2) according to Claim 10 comprising a light source (16) capable of emitting a light beam towards the imaging device (18), and a projection device (10) capable of projecting the transformed image onto the roadway.

12. Projection system (2) according to either one of Claims 10 and 11, comprising an imager capable of capturing an image of the driver of the motor vehicle and in which the processing unit (10) is capable of searching for the position of the driver in the captured image and of defining the transformation matrix (M) from the determined position of the driver.

FIG. 1

```
┌─────────────────────┐
│      Détection      │───30
└─────────────────────┘
          │
          ▼
┌─────────────────────┐
│      Emission       │───42
└─────────────────────┘
          │
          ▼
┌─────────────────────┐
│    Détermination    │───44
│      position       │
└─────────────────────┘
          │
          ▼
┌─────────────────────┐
│   Calcul matrice M  │───46
└─────────────────────┘
          │
          ▼
┌─────────────────────┐
│      Sélection      │───48
└─────────────────────┘
          │
          ▼
┌─────────────────────┐
│ Application matrice M│───50
└─────────────────────┘
          │
          ▼
┌─────────────────────┐
│     Ajout ombre     │───52
└─────────────────────┘
          │
          ▼
┌─────────────────────┐
│ Génération commande │───54
└─────────────────────┘
          │
          ▼
┌─────────────────────┐
│ Commande dispositif │───56
└─────────────────────┘
          │
          ▼
┌─────────────────────┐
│  Projection image   │───58
└─────────────────────┘
```

# FIG. 2

```
┌─────────────────────┐
│   Détermination     │──32
│     position        │
└─────────────────────┘
           │
           ▼
┌─────────────────────┐
│   Réception signal  │──34
└─────────────────────┘
           │
           ▼
┌─────────────────────┐
│   Détermination     │──36
│     traversée       │
└─────────────────────┘
           │
           ▼
┌─────────────────────┐
│       Alerte        │──40
└─────────────────────┘
```

# FIG. 3

**FIG. 4**

**FIG. 5**

-38-

Acquisition image — 60

Traitement — 62

Détection — 64

**FIG. 6**

EP 3 306 592 B1

MTH

1 — DET_POS(O, PosO1, RP)

2 — DET_POS(O, PosO2, RI)

3 —

PROJ(Fx, Ip, S)

3a — CALC_CLUM(CLUX, S, pl)

3b — CALC_POS(pl, PosL2, O, RI)

3c — DEF_PLR(plr, P1, PosL2, PosO2)

3d — DEF_PIX(pl(lig, col), ply, plz)

3e — MOD_PF(pf, Vi, Pix, Co)

3f — PROJ(ML, Fx, Vi, pf)

# FIG. 7

29

**FIG. 8**

**FIG. 9**

# FIG. 10

CALC_CLUM(CLUX, S, pl)

3a

i — CALC_POSF(pf, POSpf, pi)

ii — CALC_CECL(pi, CECL)

iii — CALC_CLUM(pi, CECL)

# FIG. 11

FIG. 12

FIG. 13

P1(Ip)

ε

0

β

**FIG. 14**

O (PosO2)

Ip

pjx

pjy

pjz

ε

Iy

Ix

RI

Iz

pl(PosL2)

**FIG. 15**

Ip

DISP

**FIG. 16**

FIG. 17

FIG. 18

FIG. 19

**FIG. 20**

O (PosO2)

ε

Ip

L1

H1

Iy

Ix

Iz

Rl

V(PosO2, PosL2)

pl

Int=plr(ply(m), plz(m))

**FIG. 21**

O (PosO2)

ε

Ip

L2

(1,1)

H2

(1,0)

(0,1)

IX

IY

(0,0)

Int=plr

pl

**FIG. 22**

L2

Pix(lig, col)

Ip

Co

H2

DISP

PR

DET_POS(O, PosO1, RP)

DET_POS(O, PosO2, RI)

CALC_CLUM(CLUX, S, pl)

CALC_POS(pl, PosL2, O, RI)

DEF_PLR(plr, P1, PosL2, PosO2)

DEF_PIX(pl(lig, col), ply, plz)

MOD_PF(pf, Vi, Pix, Co)

PROJ(Fx, Ip, S)

ML

PROJ(ML, Fx, Vi, pf)

**FIG. 23**

## RÉFÉRENCES CITÉES DANS LA DESCRIPTION

**Documents brevets cités dans la description**

- EP 2016071596 W